# EUROPEAN PATENT SPECIFICATION

(11) **EP 4 258 575 B1**
(45) Date of publication and mention of the grant of the patent: **11.02.2026**
(21) Application number: 20967345.8
(22) Date of filing: 28.12.2020
(51) Int. Cl.: H04J 3/06, H04L 69/28

(54) **DATA TRANSMISSION METHOD AND APPARATUS, AND RELATED DEVICE**
DATENÜBERTRAGUNGSVERFAHREN UND -VORRICHTUNG SOWIE ZUGEHÖRIGE VORRICHTUNG
PROCÉDÉ ET APPAREIL DE TRANSMISSION DE DONNÉES ET DISPOSITIF ASSOCIÉ

(43) Date of publication of application: 11.10.2023
(73) Proprietor: Shenzhen Yinwang Intelligent Technologies Co., Ltd., Shenzhen, Guangdong 518129 (CN)
(72) Inventor: LI, Chao, Shenzhen, Guangdong 518129 (CN); ZHANG, Xingxin, Shenzhen, Guangdong 518129 (CN); BAO, Pengxin, Shenzhen, Guangdong 518129 (CN); LIU, Jiling, Shenzhen, Guangdong 518129 (CN)
(74) Representative: Maiwald GmbH
(86) International application number: PCT/CN2020/140399
(87) International publication number: WO 2022/140995

(56) References cited:
- CN-A- 104 467 928
- CN-A- 105 680 972
- CN-A- 106 791 203
- CN-A- 108 183 965
- CN-A- 109 413 812
- CN-A- 111 193 570
- US-A1- 2013 195 443
- US-A1- 2017 251 059
- US-A1- 2017 366 430
- US-A1- 2020 052 877
- US-A1- 2020 328 872

## Description

### TECHNICAL FIELD

This application relates to the field of communication technologies, and in particular, to a data transmission method and apparatus, and a related device.

### BACKGROUND

In a communication system, a plurality of devices perform communication, and a master node (an instruction sender) sometimes expects a plurality of slave nodes (instruction receivers) to synchronously execute, at a determined moment, an instruction sent by the master node, to obtain data obtained by the plurality of slave nodes at the same moment. For example, a multi-domain controller (multi-domain controller, MDC) in an in-vehicle communication network controls a plurality of cameras to photograph synchronously.

Currently, when the master node sends an instruction to each slave node, the master node usually divides the to-be-sent instruction into a plurality of data blocks arranged in a fixed order, and transmit the data blocks to the slave node. In a process in which the master node transmits the plurality of data blocks to each slave node, some data blocks may be incorrectly transmitted. For example, after sending data 2, the master node sends a data block 4 while the master node should have sent a data block 3, and consequently sending of the data block 3 is omitted. When a data block is incorrectly transmitted, the master node reschedules transmission of the incorrectly transmitted data block. Consequently, an unfixed delay usually occurs in transmission of the instruction, resulting in jitter at a moment at which each slave node executes the instruction. When jitter occurs at moments at which some or all of the plurality of slave nodes execute the instruction, the moments at which the plurality of slave nodes execute the instruction cannot be synchronized. The US2017251059 A1 refers to a master device capable of acquiring more useful log data. The US2013195443 A1 refers to a time synchronization method, a device and a system. The US2020328872 A1 refers to a time synchronization method, an apparatus and a system.

Therefore, how to implement, in a case in which an unfixed delay occurs when a master node transmits an instruction to a plurality of slave nodes, synchronization between moments at which the plurality of slave nodes execute the instruction is a problem that needs to be resolved.

### SUMMARY

Embodiments of this application provide a data transmission method and apparatus, and a related device, to implement, in a case in which an unfixed delay occurs when a master node transmits an instruction to a plurality of slave nodes, synchronization between moments at which the plurality of slave nodes execute the instruction. The invention is defined by the independent claims, preferred embodiments are set out in the dependent claims.

According to a first aspect, a data transmission method is provided, where the method is applied to a master node and includes the following steps:
the master node sends a first synchronization moment, where
the first synchronization moment is used to implement synchronization between a first slave node timer and a master node timer; and
the master node sends a first preset instruction, where
the first preset instruction includes a first instruction effective moment, the first instruction effective moment indicates a moment at which a first slave node executes the first preset instruction, the first instruction effective moment is greater than or equal to a sum of a sending moment of the first preset instruction and a maximum delay of a first link, and the first link is a link between the master node and the first slave node.

In the foregoing solution, the master node sends the first synchronization moment to the first slave node, and indicates the first slave node to implement the synchronization between the first slave node timer and the master node timer based on the first synchronization moment. When the two timers are synchronized, the master node further sends the first preset instruction including the first instruction effective moment (the first instruction effective moment includes the maximum delay of the first link) to the first slave node, so that the first slave node executes the first preset instruction when timing reaches the first instruction effective moment. This avoids jitter at a moment at which the first slave node executes an instruction sent by the master node in a case in which there is an unfixed delay during transmission of the instruction from the master node to the first slave node.

In a possible implementation, the method further includes the following steps:
the master node sends a second synchronization moment, where
the second synchronization moment is used to implement synchronization between a second slave node timer and the master node timer; and
the master node sends a second preset instruction, where
the second preset instruction includes a second instruction effective moment, the second instruction effective moment indicates a moment at which a second slave node executes the second preset instruction, the second instruction effective moment is greater than or equal to a sum of a sending moment of the second preset instruction and a maximum delay of a second link, the second instruction effective moment is the same as the first instruction effective moment, and the second link is a link between the master node and the second slave node.

In the foregoing solution, the master node sends the second synchronization moment to the second slave node, and indicates the second slave node to implement the synchronization between the second slave node timer and the master node timer based on the second synchronization moment. When the two timers are synchronized, the master node further sends the second preset instruction including the second instruction effective moment (the second instruction effective moment includes the maximum delay of the second link) to the second slave node, so that the second slave node executes the second preset instruction when timing reaches the second instruction effective moment. Because the second instruction effective moment and the first instruction effective moment are same moments, synchronization between the moment at which the second slave node executes the second preset instruction and the moment at which the first slave node executes the first preset instruction can be implemented.

In a possible implementation, the method further includes the following steps:
the first slave node sends a third synchronization moment to the second slave node, where
the third synchronization moment is used to implement synchronization between a second slave node timer and the first slave node timer;
the master node sends a second preset instruction; and
the first slave node forwards the second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the master node sends the second preset instruction to the first slave node, the maximum delay of the first link, and a maximum delay of a third link, the second instruction effective moment is the same as the first instruction effective moment, and the third link is a link between the first slave node and the second slave node.

In the foregoing solution, when the second slave node timer and the first slave node timer are synchronized, the master node sends the second preset instruction including the second instruction effective moment (the second instruction effective moment includes the maximum delay of the second link) to the first slave node, and the first slave node forwards the second preset instruction to the second slave node, so that the second slave node executes the second preset instruction when timing reaches the second instruction effective moment. Because the second instruction effective moment and the first instruction effective moment are same moments, synchronization between the moment at which the second slave node executes the second preset instruction and the moment at which the first slave node executes the first preset instruction can be implemented.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

When the first preset instruction instructs the first camera to photograph, and the second preset instruction instructs the second camera to photograph, the foregoing solution can implement synchronous photographing by the first slave node and the second slave node. When the first preset instruction instructs the first display device to perform display, and the second preset instruction instructs the second display device to perform display, the foregoing solution can implement synchronous display by the first slave node and the second slave node.

According to a second aspect, a data transmission method is provided, where the method is applied to a slave node, and includes the following steps:
a first slave node receives a first synchronization moment, where
the first synchronization moment is used to implement synchronization between a first slave node timer and a master node timer;
the first slave node receives a first preset instruction, where
the first preset instruction includes a first instruction effective moment, the first instruction effective moment is greater than or equal to a sum of a sending moment of the first preset instruction and a maximum delay of a first link, and the first link is a link between the first slave node and a master node; and
the first slave node executes the first preset instruction at the first instruction effective moment.

In a possible implementation, the method further includes the following steps:
a second slave node receives a second synchronization moment, where
the second synchronization moment is used to implement synchronization between a second slave node timer and the master node timer;
the second slave node receives a second preset instruction, where
the second preset instruction includes a second instruction effective moment, the second instruction effective moment is greater than or equal to a sum of a sending moment of the second preset instruction and a maximum delay of a second link, the second instruction effective moment is the same as the first instruction effective moment, and the second link is a link between the master node and the second slave node; and
the second slave node executes the second preset instruction at the second instruction effective moment.

In a possible implementation, the method further includes the following steps:
the first slave node sends a third synchronization moment to a second slave node, where
the third synchronization moment is used to implement synchronization between a second slave node timer and the first slave node timer; and
the first slave node sends a second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a third aspect, a data transmission method is provided, where the method is applied to a data transmission system, the data transmission system includes a master node and a first slave node, and the method includes the following steps:
the master node sends a first synchronization moment to the first slave node, where
the first synchronization moment is used to implement synchronization between a first slave node timer and a master node timer;
the master node sends a first preset instruction to the first slave node, where
the first preset instruction includes a first instruction effective moment, the first instruction effective moment is greater than or equal to a sum of a sending moment of the first preset instruction and a maximum delay of a first link, and the first link is a link between the master node and the first slave node; and
the first slave node executes the first preset instruction at the first instruction effective moment.

In a possible implementation, the data transmission system further includes a second slave node, and the method further includes the following steps: The master node sends a second synchronization moment to the second slave node, where
the second synchronization moment is used to implement synchronization between a second slave node timer and the master node timer;
the master node sends a second preset instruction to the second slave node, where
the second preset instruction includes a second instruction effective moment, the second instruction effective moment is greater than or equal to a sum of a sending moment of the second preset instruction and a maximum delay of a second link, the second instruction effective moment and the first instruction effective moment are same moments, and the second link is a link between the master node and the second slave node; and
the second slave node executes the second preset instruction at the second instruction effective moment.

In a possible implementation, the data transmission system further includes a second slave node, and the method further includes the following steps:
the first slave node sends a third synchronization moment to the second slave node, where
the third synchronization moment is used to implement synchronization between a second slave node timer and the first slave node timer;
the first slave node sends a second preset instruction to the second slave node, where
the second preset instruction includes a second instruction effective moment, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node; and
the second slave node executes the second preset instruction at the second instruction effective moment.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a fourth aspect, a data transmission method is provided, where the method is applied to a master node, and includes the following steps:
the master node receives a fourth synchronization moment, where
the fourth synchronization moment is used to implement synchronization between a master node timer and a first slave node timer; and
the master node sends a first preset instruction, where
the first preset instruction includes a first instruction effective moment, the first instruction effective moment indicates a moment at which a first slave node executes the first preset instruction, the first instruction effective moment is greater than or equal to a sum of a sending moment of the first preset instruction and a maximum delay of a first link, and the first link is a link between the master node and the first slave node.

In the foregoing solution, the master node receives the fourth synchronization moment sent by a slave node, and implements the synchronization between the master node timer and the slave node timer based on the fourth synchronization moment. When the two timers are synchronized, the master node further sends the first preset instruction including the first instruction effective moment to the first slave node, so that the first slave node executes the first preset instruction when timing reaches the first instruction effective moment. This avoids jitter at a moment at which the first slave node executes an instruction sent by the master node in a case in which there is an unfixed delay during transmission of the instruction from the master node to the first slave node.

In a possible implementation, the method further includes the following steps:
the first slave node sends a third synchronization moment to a second slave node, where
the third synchronization moment is used to implement synchronization between a second slave node timer and the first slave node timer;
the master node sends a second preset instruction; and
the first slave node forwards the second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the master node sends the second preset instruction to the first slave node, the maximum delay of the first link, and a maximum delay of a third link, the second instruction effective moment is the same as the first instruction effective moment, and the third link is a link between the first slave node and the second slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a fifth aspect, a data transmission method is provided, where the method is applied to a slave node, and includes the following steps:
a first slave node sends a fourth synchronization moment, where
the fourth synchronization moment is used to implement synchronization between a master node timer and a first slave node timer;
the first slave node receives a first preset instruction, where
the first preset instruction includes a first instruction effective moment, the first instruction effective moment is greater than or equal to a sum of a sending moment of the first preset instruction and a maximum delay of a first link, and the first link is a link between the first slave node and a master node; and
the first slave node executes the first preset instruction at the first instruction effective moment.

In a possible implementation, the method further includes the following steps:
the first slave node sends a third synchronization moment to a second slave node, where
the third synchronization moment is used to implement synchronization between a second slave node timer and the first slave node timer; and
the first slave node sends a second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a sixth aspect, a data transmission method is provided, where the method is applied to a data transmission system, the data transmission system includes a master node and a first slave node, and the method includes the following steps:
the first slave node sends a fourth synchronization moment to the master node, where the fourth synchronization moment is used to implement synchronization between a master node timer and a first slave node timer;
the master node sends a first preset instruction to the first slave node, where
the first preset instruction includes a first instruction effective moment, the first instruction effective moment is greater than or equal to a sum of a sending moment of the first preset instruction and a maximum delay of a first link, and the first link is a link between the master node and the first slave node; and
the first slave node executes the first preset instruction at the first instruction effective moment.

In a possible implementation, the data transmission system further includes a second slave node, and the method further includes the following steps:
the first slave node sends a third synchronization moment to the second slave node, where
the third synchronization moment is used to implement synchronization between a second slave node timer and the first slave node timer;
the first slave node sends a second preset instruction to the second slave node, where
the second preset instruction includes a second instruction effective moment, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node; and
the second slave node executes the second preset instruction at the second instruction effective moment.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a seventh aspect, a data transmission method is provided, where the method is applied to a master node, and includes the following steps:
the master node obtains a first timing difference, and sends the first timing difference, where
the first timing difference is used to implement synchronization between a first slave node timer and a master node timer, the first timing difference is a timing difference between the master node timer and the first slave node timer that is obtained when training on a first link is completed, and the first link is a link between the master node and a first slave node; and
the master node sends a first preset instruction, where
the first preset instruction includes a first instruction effective moment, the first instruction effective moment indicates a moment at which the first slave node executes the first preset instruction, and the first instruction effective moment is greater than or equal to a sum of a sending moment of the first preset instruction and a maximum delay of the first link.

In the foregoing solution, the master node sends the first timing difference to the first slave node, and indicates the first slave node to implement the synchronization between the first slave node timer and the master node timer based on the first timing difference. When the two timers are synchronized, the master node further sends the first preset instruction including the first instruction effective moment to the first slave node, so that the first slave node executes the first preset instruction when timing reaches the first instruction effective moment. This avoids jitter at a moment at which the first slave node executes an instruction sent by the master node in a case in which there is an unfixed delay during transmission of the instruction from the master node to the first slave node.

In a possible implementation, the method further includes the following steps:
the master node obtains a second timing difference, and sends the second timing difference, where
the second timing difference is used to implement synchronization between a second slave node timer and the master node timer, the second timing difference is a timing difference between the master node timer and the second slave node timer that is obtained when training on a second link is completed, and the second link is a link between the master node and a second slave node; and
the master node sends a second preset instruction, where
the second preset instruction includes a second instruction effective moment, the second instruction effective moment indicates a moment at which the second slave node executes the second preset instruction, the second instruction effective moment is greater than or equal to a sum of a sending moment of the second preset instruction and a maximum delay of the second link, and the second instruction effective moment is the same as the first instruction effective moment.

In the foregoing solution, the master node sends the second timing difference to the second slave node, and indicates the second slave node to implement the synchronization between the second slave node timer and the master node timer based on the second timing difference. When the two timers are synchronized, the master node further sends the second preset instruction including the second instruction effective moment to the second slave node, so that the second slave node executes the second preset instruction when timing reaches the second instruction effective moment. Because the second instruction effective moment and the first instruction effective moment are same moments, synchronization between the moment at which the second slave node executes the second preset instruction and the moment at which the first slave node executes the first preset instruction can be implemented.

In a possible implementation, the method further includes the following steps:
the first slave node obtains a third timing difference, and sends the third timing difference to a second slave node, where
the third timing difference is used to implement synchronization between a second slave node timer and the first slave node timer, the third timing difference is a timing difference between the first slave node timer and the second slave node timer that is obtained when training on a third link is completed, and the third link is a link between the first slave node and the second slave node;
the master node sends a second preset instruction; and
the first slave node forwards the second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the master node sends the second preset instruction to the first slave node, the maximum delay of the first link, and a maximum delay of the third link, and the second instruction effective moment is the same as the first instruction effective moment.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to an eighth aspect, a data transmission method is provided, where the method is applied to a slave node, and includes the following steps:
a first slave node receives a first timing difference, where
the first timing difference is used to implement synchronization between a first slave node timer and a master node timer, the first timing difference is a timing difference between the master node timer and the first slave node timer that is obtained when training on a first link is completed, and the first link is a link between the first slave node and a master node;
the first slave node receives a first preset instruction, where
the first preset instruction includes a first instruction effective moment, and the first instruction effective moment is greater than or equal to a sum of a sending moment of the first preset instruction and a maximum delay of the first link; and
the first slave node executes the first preset instruction at the first instruction effective moment.

In a possible implementation, the method further includes the following steps:
a second slave node receives a second timing difference, where
the second timing difference is used to implement synchronization between a second slave node timer and the master node timer;
the second slave node receives a second preset instruction, where
the second preset instruction includes a second instruction effective moment, the second instruction effective moment is greater than or equal to a sum of a sending moment of the second preset instruction and a maximum delay of a second link, the second instruction effective moment is the same as the first instruction effective moment, and the second link is a link between the master node and the second slave node; and
the second slave node executes the second preset instruction at the second instruction effective moment.

In a possible implementation, the method further includes the following steps:
the first slave node obtains a third timing difference, and sends the third timing difference to a second slave node, where
the third timing difference is used to implement synchronization between a second slave node timer and the first slave node timer, the second timing difference is a timing difference between the first slave node timer and the second slave node timer that is obtained when training on a third link is completed, and the third link is a link between the first slave node and the second slave node; and
the first slave node sends a second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of the third link, and the second instruction effective moment is the same as the first instruction effective moment.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a ninth aspect, a data transmission method is provided, where the method is applied to a data transmission system, the data transmission system includes a master node and a first slave node, and the method includes the following steps:
the master node obtains a first timing difference, and sends the first timing difference to the first slave node, where
the first timing difference is used to implement synchronization between a first slave node timer and a master node timer;
the master node sends a first preset instruction to the first slave node, where
the first preset instruction includes a first instruction effective moment, the first instruction effective moment is greater than or equal to a sum of a sending moment of the first preset instruction and a maximum delay of a first link, and the first link is a link between the master node and the first slave node; and
the first slave node executes the first preset instruction at the first instruction effective moment.

In a possible implementation, the data transmission system further includes a second slave node, and the method further includes the following steps:
the master node obtains a second timing difference, and sends the second timing difference to the second slave node, where
the second timing difference is used to implement synchronization between a second slave node timer and the master node timer;
the master node sends a second preset instruction to the second slave node, where
the second preset instruction includes a second instruction effective moment, the second instruction effective moment is greater than or equal to a sum of a sending moment of the second preset instruction and a maximum delay of a second link, the second instruction effective moment and the first instruction effective moment are same moments, and the second link is a link between the master node and the second slave node; and
the second slave node executes the second preset instruction at the second instruction effective moment.

In a possible implementation, the data transmission system further includes a second slave node, and the method further includes the following steps:
the first slave node obtains a third timing difference, and sends the third timing difference to the second slave node, where
the third timing difference is used to implement synchronization between a second slave node timer and the first slave node timer, the third timing difference is a timing difference between the first slave node timer and the second slave node timer that is obtained when training on a third link is completed;
the first slave node sends a second preset instruction to the second slave node, where
the second preset instruction includes a second instruction effective moment, the second instruction effective moment is greater than or equal to a sum of a moment at which the master node sends the second preset instruction to the first slave node, the maximum delay of the first link, and a maximum delay of the third link, the second instruction effective moment is the same as the first instruction effective moment, and the third link is a link between the first slave node and the second slave node; and
the second slave node executes the second preset instruction at the second instruction effective moment.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a tenth aspect, a data transmission apparatus is provided, where the apparatus is applied to a master node, and includes a sending module, where
the sending module is configured to send a first synchronization moment, where
the first synchronization moment is used to implement synchronization between a first slave node timer and a master node timer; and
the sending module is further configured to send a first preset instruction, where
the first preset instruction includes a first instruction effective moment, the first instruction effective moment indicates a moment at which a first slave node executes the first preset instruction, the first instruction effective moment is greater than or equal to a sum of a sending moment of the first preset instruction and a maximum delay of a first link, and the first link is a link between the master node and the first slave node.

In a possible implementation, the sending module is further configured to:
send a second synchronization moment, where
the second synchronization moment is used to implement synchronization between a second slave node timer and the master node timer; and
send a second preset instruction, where
the second preset instruction includes a second instruction effective moment, the second instruction effective moment indicates a moment at which a second slave node executes the second preset instruction, the second instruction effective moment is greater than or equal to a sum of a sending moment of the second preset instruction and a maximum delay of a second link, the second instruction effective moment is the same as the first instruction effective moment, and the second link is a link between the master node and the second slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to an eleventh aspect, a data transmission apparatus is provided, where the apparatus includes a first sub-apparatus, the first sub-apparatus is applied to a first slave node, and the first sub-apparatus includes a first receiving module and a first execution module, where
the first receiving module is configured to receive a first synchronization moment, where
the first synchronization moment is used to implement synchronization between a first slave node timer and a master node timer;
the first receiving module is further configured to receive a first preset instruction, where
the first preset instruction includes a first instruction effective moment, the first instruction effective moment is greater than or equal to a sum of a sending moment of the first preset instruction and a maximum delay of a first link, and the first link is a link between the first slave node and a master node; and
the first execution module is configured to execute the first preset instruction at the first instruction effective moment.

In a possible implementation, the system further includes a second sub-apparatus, the second sub-apparatus is applied to a second slave node, and the second sub-apparatus includes a second receiving module and a second execution module, where
the second receiving module is configured to receive a second synchronization moment, where
the second synchronization moment is used to implement synchronization between a second slave node timer and the master node timer;
the second receiving module is further configured to receive a second preset instruction, where
the second preset instruction includes a second instruction effective moment, the second instruction effective moment is greater than or equal to a sum of a sending moment of the second preset instruction and a maximum delay of a second link, the second instruction effective moment is the same as the first instruction effective moment, and the second link is a link between the master node and the second slave node; and
the second execution module is configured to execute the second preset instruction at the second instruction effective moment.

In a possible implementation, the first sub-apparatus further includes a sending module, where
the sending module is configured to send a second synchronization moment to the second slave node, where
the second synchronization moment is used to implement synchronization between the second slave node timer and the first slave node timer; and
the sending module is further configured to send the second preset instruction to the second slave node, where
the second preset instruction includes the second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a twelfth aspect, a data transmission system is provided, where the system includes the data transmission apparatus according to the tenth aspect and the data transmission apparatus according to the eleventh aspect.

According to a thirteenth aspect, a data transmission apparatus is provided, where the apparatus is applied to a master node, and includes:
a receiving module, configured to receive a fourth synchronization moment, where
the fourth synchronization moment is used to implement synchronization between a master node timer and a first slave node timer; and
a sending module, configured to send a first preset instruction, where
the first preset instruction includes a first instruction effective moment, the first instruction effective moment indicates a moment at which a first slave node executes the first preset instruction, the first instruction effective moment is greater than or equal to a sum of a sending moment of the first preset instruction and a maximum delay of a first link, and the first link is a link between the master node and the first slave node.

In a possible implementation, the first preset instruction instructs a first camera to photograph; or the first preset instruction instructs a first display device to perform display.

According to a fourteenth aspect, a data transmission apparatus is provided, where the apparatus is applied to a first slave node, and includes:
a sending module, configured to send a fourth synchronization moment, where
the fourth synchronization moment is used to implement synchronization between a master node timer and a first slave node timer;
a receiving module, configured to receive a first preset instruction, where
the first preset instruction includes a first instruction effective moment, the first instruction effective moment is greater than or equal to a sum of a sending moment of the first preset instruction and a maximum delay of a first link, and the first link is a link between the first slave node and a master node; and
an execution module, configured to execute the first preset instruction at the first instruction effective moment.

In a possible implementation, the sending module is further configured to:
send a third synchronization moment to a second slave node, where
the third synchronization moment is used to implement synchronization between a second slave node timer and the first slave node timer; and
send a second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a fifteenth aspect, a data transmission system is provided, where the system includes the data transmission apparatus according to the thirteenth aspect and the data transmission apparatus according to the fourteenth aspect.

According to a sixteenth aspect, a data transmission apparatus is provided, where the apparatus is applied to a master node, and includes a sending module, where
the sending module is configured to obtain a first timing difference, and send the first timing difference, where
the first timing difference is used to implement synchronization between a first slave node timer and a master node timer, the first timing difference is a timing difference between the master node timer and the first slave node timer that is obtained when training on a first link is completed, and the first link is a link between the master node and a first slave node; and
the sending module is further configured to send a first preset instruction, where
the first preset instruction includes a first instruction effective moment, the first instruction effective moment indicates a moment at which the first slave node executes the first preset instruction, and the first instruction effective moment is greater than or equal to a sum of a sending moment of the first preset instruction and a maximum delay of the first link.

In a possible implementation, the sending module is further configured to:
obtain a second timing difference, and send the second timing difference, where
the second timing difference is used to implement synchronization between a second slave node timer and the master node timer, the second timing difference is a timing difference between the master node timer and the second slave node timer that is obtained when training on a second link is completed, and the second link is a link between the master node and a second slave node; and
send a second preset instruction, where
the second preset instruction includes a second instruction effective moment, the second instruction effective moment indicates a moment at which the second slave node executes the second preset instruction, the second instruction effective moment is greater than or equal to a sum of a sending moment of the second preset instruction and a maximum delay of the second link, and the second instruction effective moment is the same as the first instruction effective moment.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to a seventeenth aspect, a data transmission apparatus is provided, where the system includes a first sub-apparatus, the first sub-apparatus is applied to a first slave node, and the first sub-apparatus includes a first receiving module and a first execution module, where
the first receiving module is configured to receive a first timing difference, where
the first timing difference is used to implement synchronization between a first slave node timer and a master node timer, the first timing difference is a timing difference between the master node timer and the first slave node timer that is obtained when training on a first link is completed, and the first link is a link between the first slave node and a master node;
the first receiving module is further configured to receive a first preset instruction, where
the first preset instruction includes a first instruction effective moment, and the first instruction effective moment is greater than or equal to a sum of a sending moment of the first preset instruction and a maximum delay of the first link; and
the first execution module is configured to execute the first preset instruction at the first instruction effective moment.

In a possible implementation, the system further includes a second sub-apparatus, the second sub-apparatus is applied to a second slave node, and the second sub-apparatus includes a second receiving module and a second execution module, where
the second receiving module is configured to receive a second timing difference, where
the second timing difference is used to implement synchronization between a second slave node timer and the master node timer, the second timing difference is a timing difference between the master node timer and the second slave node timer that is obtained when training on a second link is completed;
the second receiving module is further configured to receive a second preset instruction, where
the second preset instruction includes a second instruction effective moment, the second instruction effective moment is greater than or equal to a sum of a sending moment of the second preset instruction and a maximum delay of the second link, the second instruction effective moment is the same as the first instruction effective moment, and the second link is a link between the master node and the second slave node; and
the second execution module is configured to execute the second preset instruction at the second instruction effective moment.

In a possible implementation, the first sub-apparatus further includes a sending module, where
the sending module is configured to obtain a third timing difference, and send the third timing difference to the second slave node, where
the third timing difference is used to implement synchronization between the second slave node timer and the first slave node timer, the third timing difference is a timing difference between the first slave node timer and the second slave node timer that is obtained when training on a third link is completed, and the third link is a link between the first slave node and the second slave node; and
the sending module is further configured to send a second preset instruction to the second slave node, where
the second preset instruction includes a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of the third link, and the second instruction effective moment is the same as the first instruction effective moment.

In a possible implementation, the second preset instruction is generated by the master node or generated by the first slave node.

In a possible implementation, the first preset instruction instructs a first camera to photograph, and the second preset instruction instructs a second camera to photograph; or the first preset instruction instructs a first display device to perform display, and the second preset instruction instructs a second display device to perform display.

According to an eighteenth aspect, a data transmission system is provided, where the system includes the data transmission apparatus according to the sixteenth aspect and the data transmission apparatus according to the seventeenth aspect.

According to a nineteenth aspect, a data transmission apparatus is provided, where the apparatus includes a processor and a memory, the memory is configured to store instructions, the processor is configured to execute the instructions, and when the processor executes the instructions, the data transmission apparatus performs the method according to the first aspect, or performs the method according to the fourth aspect, or performs the method according to the seventh aspect.

According to a twentieth aspect, a data transmission apparatus is provided, where the apparatus includes a processor and a memory, the memory is configured to store instructions, the processor is configured to execute the instructions, and when the processor executes the instructions, the data transmission apparatus performs the method according to the second aspect, or performs the method according to the fifth aspect, or performs the method according to the eighth aspect.

According to a twenty-first aspect, a computer-readable storage medium is provided, where the computer-readable medium stores computer-readable instructions, and when the computer-readable instructions are run, the method according to any one of the first aspect to the ninth aspect is performed.

According to a twenty-second aspect, an electronic device is provided, including one or more processors, where the one or more processors are coupled to a memory, the memory stores a computer program, and the processor is configured to execute the computer program stored in the memory, to implement the method according to any one of the first aspect to the ninth aspect.

According to a twenty-third aspect, a computer program product is provided, including a computer program, where when the computer program is read and executed by a computing device, the computing device is enabled to perform the method according to any one of the first aspect to the ninth aspect.

According to a twenty-fourth aspect, a vehicle is provided, including the data transmission apparatus according to the tenth aspect and the data transmission apparatus according to the eleventh aspect, or including the data transmission apparatus according to the thirteenth aspect and the data transmission apparatus according to the fourteenth aspect, or the data transmission apparatus according to the sixteenth aspect and the data transmission apparatus according to the seventeenth aspect, or the data transmission apparatus according to the nineteenth aspect and the data transmission apparatus according to the twentieth aspect, or the data transmission system according to any one of the twelfth aspect, the fifteenth aspect, and the eighteenth aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a schematic diagram of a structure of a communication system according to an embodiment of this application;
FIG. 2 is a schematic flowchart of a link training method according to an embodiment of this application;
FIG. 3 is a schematic diagram of states of a master node and a slave node in a link training process according to an embodiment of this application;
FIG. 4 is a schematic interaction diagram of a data transmission method according to an embodiment of this application;
FIG. 5 is a schematic diagram of transmission of a first training frame and a second training frame according to an embodiment of this application;
FIG. 6 is a schematic interaction diagram of a data transmission method according to an embodiment of this application;
FIG. 7 is a schematic interaction diagram of a data transmission method according to an embodiment of this application;
FIG. 8 is a schematic diagram of a structure of another communication system according to an embodiment of this application;
FIG. 9 is a schematic diagram of a structure of an in-vehicle camera system according to an embodiment of this application;
FIG. 10 is a schematic diagram of implementing synchronous photographing of a vehicle according to an embodiment of this application;
FIG. 11 is a schematic interaction diagram of a synchronous instruction execution method according to an embodiment of this application;
FIG. 12 is a schematic interaction diagram of a synchronous instruction execution method according to an embodiment of this application;
FIG. 13 is a schematic interaction diagram of a synchronous instruction execution method according to an embodiment of this application;
FIG. 14 is a schematic interaction diagram of a synchronous instruction execution method according to an embodiment of this application;
FIG. 15 is a schematic interaction diagram of a synchronous instruction execution method according to an embodiment of this application;
FIG. 16 is a schematic interaction diagram of a synchronous instruction execution method according to an embodiment of this application;
FIG. 17 is a schematic diagram of a structure of a data transmission apparatus according to an embodiment of this application;
FIG. 18 is a schematic diagram of a structure of a data transmission apparatus according to an embodiment of this application;
FIG. 19 is a schematic diagram of a structure of a data transmission apparatus according to an embodiment of this application;
FIG. 20 is a schematic diagram of a structure of a data transmission apparatus according to an embodiment of this application; and
FIG. 21 is a schematic diagram of a structure of an electronic device according to an embodiment of this application.

### DESCRIPTION OF EMBODIMENTS

The following describes technical solutions of this application with reference to accompanying drawings.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one item (piece) of the following" or a similar expression thereof means any combination of the items, including any combination of singular items (pieces) or plural items (pieces). For example, at least one (piece) of a, b, or c may represent a, b, c, a and b, a and c, b and c, or a, b, and c, where a, b, and c may be singular or plural.

Any embodiment or design scheme described as an "example" or "for example" in this application should not be explained as being more preferred or having more advantages than another embodiment or design scheme. Exactly, using of the word "example" or " for example" or the like is intended to present a relative concept in a specific manner.

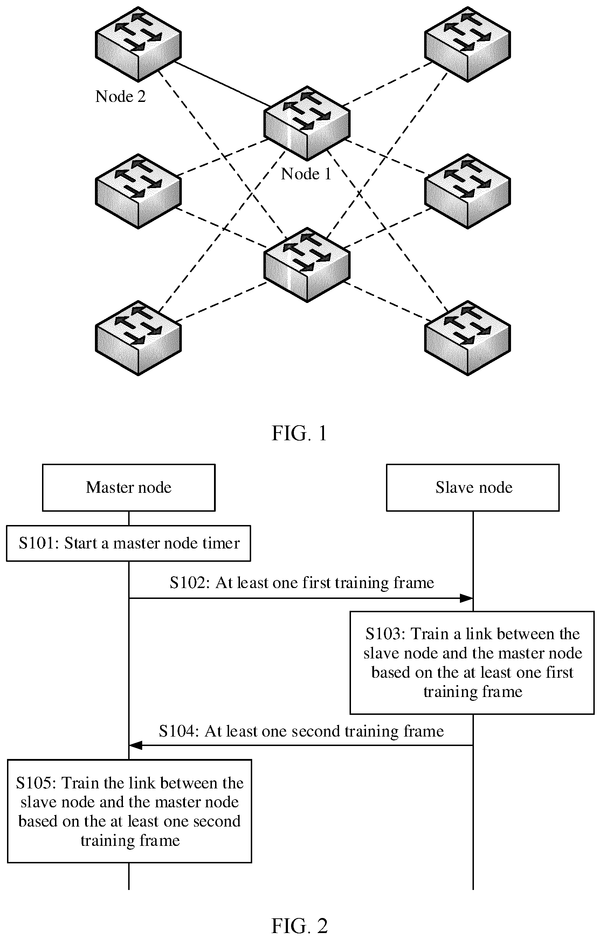

A communication system in embodiments of this application is first described. FIG. 1 is a schematic diagram of a structure of a communication system according to an embodiment of this application. As shown in FIG. 1, the communication system includes at least a node 1 and a node 2. The two nodes are network nodes and can perform wired communication or wireless communication. A communication link between the node 1 and the node 2 may be two nodes in an in-vehicle network, for example, a communication link between an MDC and a sensor, a communication link between a deserializer (deserializer, DES for short) connected to the MDC and a serializer (serializer, SER for short) connected to the sensor, a communication link between a cockpit domain controller (Cockpit domain controller, CDC) and a display device (such as a display), a communication link between a SER connected to the CDC and a DES connected to the display device, or the like. Network elements in the in-vehicle network may be as follows: a sensor (an in-vehicle sensor such as a microphone, a millimeter wave radar, a laser radar, an ultrasonic radar, a camera, a global positioning system (global positioning system, GPS) module, an inertial measurement unit (inertial measurement unit, IMU), a speed sensor, an acceleration sensor, a humidity sensor, and a light intensity sensor); a playback device (such as a display device, an external power amplifier and a speaker); a switch (a switch or router responsible for routing and switching, which converges and forwards various data services, such as audio and video, a synchronization message, and a control message); a controller/computing center/storage center (responsible for computing and control of a specific function, which may be independent of or integrated with a gateway, and specifically may be an in-vehicle computing platform, an in-vehicle computer, a domain controller, or a multi-domain controller, such as an autonomous driving controller and an infotainment controller, or may be a data center for storing important data, such as an in-vehicle event data recorder).

In addition, the node 1 and the node 2 may alternatively be two nodes in another communication network, for example, nodes in a network such as a mobile terminal, a monitoring device, or a smart home. This is not specifically limited in this embodiment of this application.

It should be noted that, in specific implementation, the communication system shown in FIG. 1 may include more nodes, for example, may further include a node 3 and a node 4, where the node 1 communicates with the node 3, and the node 2 communicates with the node 4. Alternatively, the node 1 is connected to the node 4 by using the node 3, and the like, which is not specifically limited herein.

In the communication system shown in FIG. 1, when a master node (a node for sending an instruction, which can be the node 1 or node 2) transmits an instruction that is divided into a plurality of data blocks in a fixed order to each slave node in a plurality of slave nodes (nodes for receiving the instruction), the data block may be incorrectly transmitted. When the data block is incorrectly transmitted, the master node may reschedule transmission of the incorrectly transmitted data block. Because retransmission of the data block may cause an unfixed delay in transmission of a complete instruction, jitter occurs at a moment when each slave node receives the complete instruction and executes the instruction. When jitter occurs at a moment at which some or all of the slave nodes in the plurality of slave nodes execute an instruction, there is a problem that moments at which the plurality of slave nodes execute the instruction cannot be synchronized.

Embodiments of this application provide a data transmission method and apparatus, and a related device. Before the data transmission method provided in embodiments of this application is described, a link training concept and a link training process in embodiments of this application are first described.

The link training is mainly used to implement clock synchronization, scrambling code synchronization, capability negotiation, and the like between two nodes, so as to establish a reliable communication link between the two nodes. In the communication system, before the master node and the slave node start to communicate normally (for example, the master node sends an instruction to the slave node or the slave node sends data to the master node), a link training process between the master node and the slave node needs to be completed.

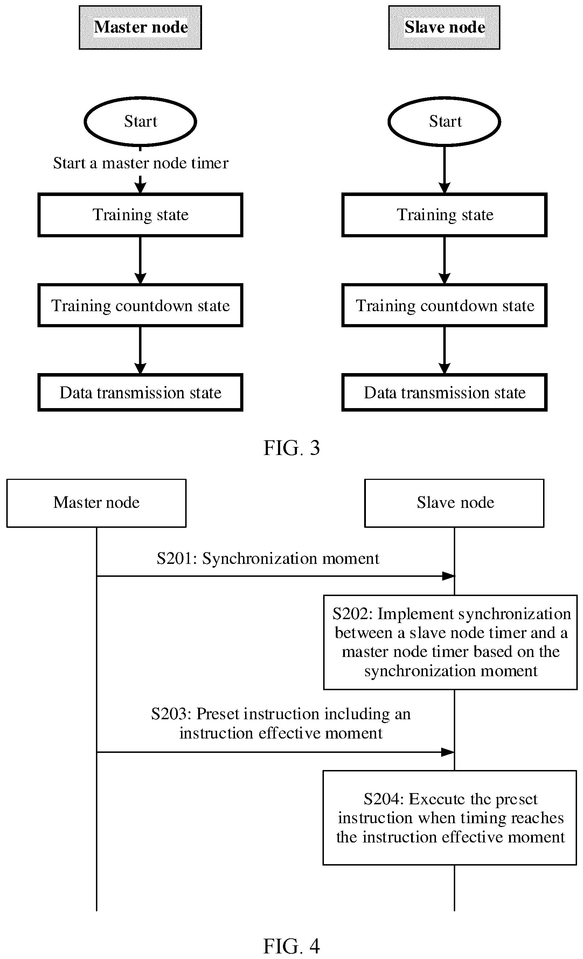

The following describes the link training process in detail with reference to FIG. 2 and FIG. 3. FIG. 2 is a schematic flowchart of a link training method according to an embodiment of this application, and shows procedures that may be performed by a master node and a slave node during link training. FIG. 3 is a schematic diagram of states of a master node and a slave node in a link training process according to an embodiment of this application, and shows state nodes that may be experienced by the master node and the slave node during link training.

As shown in FIG. 2, the link training method may include the following procedure.

S101: A master node starts a master node timer.

S102: The master node sends at least one first training frame to a slave node.

S103: The slave node receives the at least one first training frame sent by the master node, and trains a link between the slave node and the master node based on the at least one first training frame.

S104: The slave node sends at least one second training frame to the master node.

S105: The master node receives the at least one second training frame sent by the slave node, and trains the link between the slave node and the master node based on the at least one second training frame.

As shown in FIG. 3, after link training starts, the master node first enters a training state, starts the master node timer, and starts to send at least one first training frame to the slave node. After receiving any one of the at least one first training frame sent by the master node, the slave node also enters the training state, and starts to send at least one second training frame to the master node.

In specific implementation, a slave node timer may be started after the link training starts, or may be started when entering the training state, or may be started when entering a training countdown state or a data transmission state described below. This is not specifically limited herein. When the master node timer or the slave node timer is started, an initial value may be 0 or may not be 0. This is not specifically limited herein.

After the slave node and the master node enter the training state synchronously, the two parties exchange training information. Specifically, when the first training frame includes first training information and the second training frame includes second training information, the two parties implement clock synchronization, scrambling code synchronization, capability negotiation, and the like based on the training information sent by the other party. After the master node and the slave node send a specific quantity of first training frames and second training frames to implement clock synchronization, scrambling code synchronization, capability negotiation, and the like, the slave node sends, to the master node, first feedback information indicating that the master node may enter the training countdown state. After receiving the first feedback information, the master node may enter the training countdown state. When entering the training countdown state, the master node sends, to the slave node, second feedback information indicating that the master node has entered the training countdown state. After receiving the second feedback information sent by the master node, the slave node also enters the training countdown state.

After entering the training countdown state, the master node starts to send the last several remaining first training frames to the slave node, and the slave node also sends the last several remaining second training frames to the master node. Generally, after the training countdown state is entered, a quantity of training frames sent by the master node and the slave node to each other is the same. After the master node and the slave node send the last several remaining first training frames and second training frames to each other, the master node and the slave node automatically enter the data transmission state.

After the slave node and the master node synchronously enter the data transmission state, data transmission or instruction transmission may be performed between the master node and the slave node.

The following describes the data transmission method provided in embodiments of this application by using examples.

In a data transmission method, in a process of training a link between a master node and a slave node, the master node may send a synchronization moment to the slave node, and indicate the slave node to implement synchronization between a slave node timer and a master node timer based on the synchronization moment. In a case in which the two timers are synchronized, the master node further sends an instruction including an instruction effective moment (the instruction effective moment includes a maximum delay of the link between the master node and the slave node) to the slave node, so that the slave node executes the instruction sent by the master node when timing reaches the instruction effective moment. This avoids jitter at a moment at which the slave node executes the instruction sent by the master node in a case in which an unfixed delay occurs when the master node transmits the instruction to the slave node.

To facilitate a clear understanding of the data transmission method provided in the foregoing embodiment of this application, the following provides a schematic interaction diagram of the method. As shown in FIG. 4, the method may include the following steps.

S201: A master node sends a synchronization moment to a slave node in a process of training a link between the master node and the slave node.

In specific implementation, when entering a training countdown state, the master node determines a quantity of first training frames to be sent subsequently (in the following, a preset quantity indicates a quantity of first training frames determined to be sent subsequently when the master node enters the training countdown state). After sending the preset quantity of first training frames, the master node automatically enters a data transmission state.

In specific implementation, after the master node enters the training countdown state, in the preset quantity of first training frames to be sent to the slave node, each first training frame may include a count of remaining first training frames, and the count of remaining first training frames indicates a quantity of remaining to-be-sent first training frames. For example, if the count of remaining first training frames is 3, it indicates that the master node further needs to send three first training frames after sending the current first training frame.

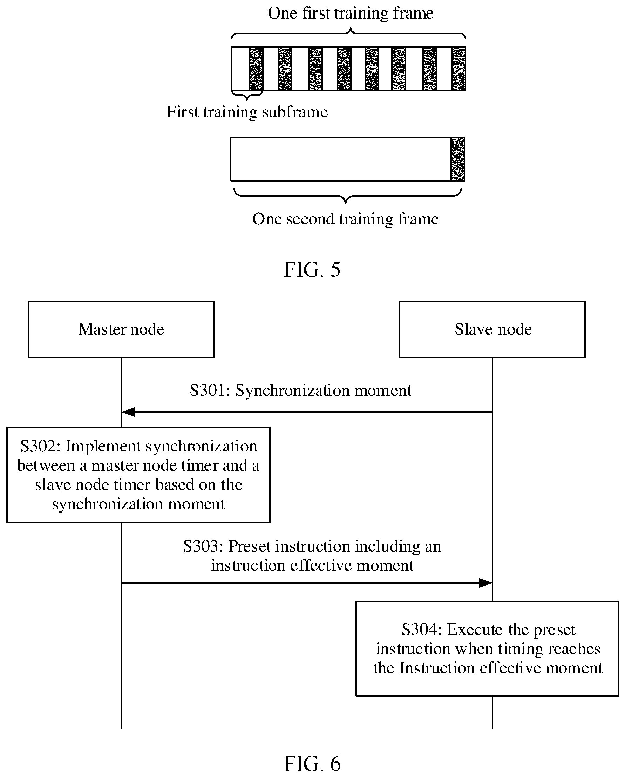

In some cases, because a rate at which the master node transmits a training frame to the slave node is greater than a rate at which the slave node transmits a training frame to the master node, the count of remaining first training frames may also indicate a quantity of groups of remaining to-be-sent first training subframes. A quantity of first training subframes in one group is a quantity of first training subframes that can be sent by the master node in duration in which the slave node sends one second training frame. As shown in FIG. 5, when the slave node transmits one second training frame, the master node can transmit eight first training subframes. That is, time at which the master node sends eight first training subframes is aligned with time at which the master node receives one second training frame, and time at which the slave node sends one second training frame is aligned with time at which the slave node receives eight first training subframes. In this case, the master node can simultaneously complete receiving of one second training frame and sending of eight first training subframes, and the slave node can simultaneously complete sending of one second training frame and receiving of eight first training subframes. The two nodes can enable a next state without extra waiting time.

In a specific embodiment of this application, the master node may obtain a synchronization moment through calculation based on the count of remaining first training frames and duration of the first training frame. For example, it is assumed that when the master node completes sending of the current first training frame, the master node timer runs to 14 µs, and the count of remaining first training frames is 3. Duration of each first training frame is 2 µs, that is, the master node sends one first training frame every 2 µs, and the master node may determine a synchronization moment = 14 µs + 3*2 µs = 20 µs.

In a specific embodiment of this application, after entering the training countdown state, the master node may carry the synchronization moment in some or all of the preset quantity of first training frames to be sent, to send the synchronization moment to the slave node.

S202: The slave node receives the synchronization moment sent by the master node, and implements synchronization between a slave node timer and the master node timer based on the synchronization moment.

It can be learned from the foregoing description that the master node calculates the synchronization moment based on the count of remaining first training frames and the duration of the first training frame. It can be understood that when sending of the first training frame in the count of remaining first training frames is completed, timing of the master node timer reaches the synchronization moment. A value of the slave node timer is also the synchronization moment when the slave node needs to complete sending of the second training frame in the count of remaining second training frames, so as to implement synchronization between the slave node timer and the master node timer.

In specific implementation, when the slave node completes the sending of the second training frame in the count of remaining second training frames, timing of the slave node timer precisely reaches the synchronization moment. In this case, the slave node does not need to adjust the value of the slave node timer. When the slave node completes sending of the second training frame in the count of remaining second training frames, the timing of the slave node timer does not reach the synchronization moment. In this case, the slave node may adjust the value of the slave node timer to the synchronization moment.

The following describes how the slave node implements synchronization between the slave node timer and the master node timer based on the synchronization moment by using an example in which the count of remaining first training frames and the count of remaining second training frames are both 3, the duration of both the first training frame and the duration of the second training frame is 2 µs, and the synchronization moment is 20 µs.

It is assumed that when the slave node completes receiving of the current first training frame (namely, the last but three first training frame), the slave node timer runs to 14 µs. When the slave node completes sending of the remaining three second training frames, timing of the slave node timer may reach 20 µs. In this case, the slave node does not need to adjust the value of the slave node timer. It is assumed that when the slave node completes receiving of the current first training frame, the slave node timer runs to 12 µs. When the slave node completes sending of the remaining three second training frames, timing of the slave node timer may reach 18 µs. In this case, the slave node may adjust the value of the slave node timer from 18 µs to 20 µs based on the synchronization moment 20 µs.

S203: The master node sends a preset instruction including an instruction effective moment to the slave node.

The instruction effective moment indicates a moment at which the slave node executes the preset instruction.

In a specific embodiment of this application, before the master node sends the preset instruction including the instruction effective moment to the slave node, the master node may first determine a sending moment of the preset instruction (namely, a moment at which the master node sends the preset instruction to the slave node), and determine the instruction effective moment based on the sending moment of the preset instruction and a maximum delay of the link between the master node and the slave node. Specifically, the instruction effective moment is greater than or equal to a sum of the sending moment of the preset instruction and the maximum delay of the link between the master node and the slave node. The delay is time required for a packet to be transmitted from one node to another node, and includes one or more of a sending delay, a propagation delay, a processing delay, and a queuing delay.

It can be learned that, when sending the preset instruction to the slave node, the master node already considers a possibility that a data transmission error occurs in a transmission process of the preset instruction and that an unfixed delay occurs during transmission of the preset instruction. That is, when the master node sends the preset instruction to the slave node, even if the data transmission error occurs, and in a case in which the master node performs data retransmission or the unfixed delay occurs in the transmission of the preset instruction, it can be also ensured that the slave node can execute the preset instruction when timing reaches the instruction effective moment because the instruction effective moment is greater than or equal to the sum of the sending moment of the preset instruction and the maximum delay of the link between the master node and the slave node.

For example, it is assumed that the maximum delay of the link between the master node and the slave node is 3 µs, and the master node determines that the sending moment of the preset instruction is 22 µs when the timing of the master node timer reaches 20 µs. In this case, the master node may obtain, through calculation, that the sum of the sending moment 22 µs of the preset instruction and the maximum delay 3 µs of the link between the master node and the slave node is 25 µs. Therefore, the instruction effective moment determined by the master node may be any moment greater than or equal to 25 µs, for example, 25 µs or 26 µs. This is not specifically limited herein.

It is assumed that the instruction effective moment is 25 µs, because the sending moment of the preset instruction is 22 µs, the master node may send the preset instruction including the effective moment 25 µs of the instruction to the slave node when timing reaches 22 µs. In this instruction transmission process, an actual delay of the link between the master node and the slave node is less than 3 µs. In this case, the slave node receives the preset instruction before timing reaches 25 µs. Because the instruction effective moment is 25 µs, even if the slave node receives the preset instruction before timing reaches 25 µs, the slave node may still wait for the timing to 25 µs before executing the preset instruction. In this instruction transmission process, when the actual delay of the link between the master node and the slave node is equal to 3 µs, the slave node receives the preset instruction when timing reaches 25 µs. In this case, the slave node may directly execute the preset instruction when receiving the preset instruction.

In specific implementation, the preset instruction may be any instruction, for example, a photographing instruction instructing a camera to photograph, or a display instruction instructing a display device to perform display. This is not specifically limited herein.

S204: The slave node receives the preset instruction that includes the instruction effective moment and that is sent by the master node, and executes the preset instruction when timing reaches the instruction effective moment.

The following describes another data transmission method provided in an embodiment of this application.

In the data transmission method, in the process of training the link between the master node and the slave node, the master node may receive the synchronization moment sent by the slave node, and implement the synchronization between the master node timer and the slave node timer based on the synchronization moment. In a case in which the two timers are synchronized, the master node further sends the instruction including the instruction effective moment to the slave node, so that the slave node executes the instruction sent by the master node when timing reaches the instruction effective moment. This avoids jitter at a moment at which the slave node executes the instruction sent by the master node in a case in which an unfixed delay occurs when the master node transmits the instruction to the slave node.

To facilitate a clear understanding of the data transmission method provided in the foregoing embodiment of this application, the following provides a schematic interaction diagram of the method. As shown in FIG. 6, the method may include the following steps.

S301: A slave node sends a synchronization moment to a master node in a process of training a link between the slave node and the master node.

In specific implementation, after entering a training countdown state, the slave node determines a count of remaining second training frames based on a count of remaining first training frames included in a first training frame sent by the master node. Generally, the count of remaining second training frames is equal to the count of remaining first training frames. The count of remaining second training frames indicates a quantity of remaining to-be-sent second training frames.

In some cases, because a rate at which the slave node transmits a training frame to the master node is greater than a rate at which the master node transmits a training frame to the slave node, the count of remaining second training frames also indicates a quantity of groups of remaining to-be-sent second training subframes. A quantity of second training subframes in one group is a quantity of second training subframes that can be sent by the slave node in duration in which the master node sends one first training frame.

In a specific embodiment of this application, the slave node may obtain the synchronization moment through calculation based on a quantity of remaining second training frames and duration of the second training frame, and then carry the synchronization moment in the to-be-sent second training frame, to send the synchronization moment to the master node.

S302: The master node receives the synchronization moment sent by the slave node, and implements synchronization between a master node timer and a slave node timer based on the synchronization moment.

A process in which the master node implements the synchronization between the master node timer and the slave node timer based on the synchronization moment is similar to the process in which the slave node implements the synchronization between the slave node timer and the master node timer based on the synchronization moment in S202 in the embodiment shown in FIG. 2. For details, refer to S202 and related descriptions. Details are not described herein again.

S303: The master node sends a preset instruction including an instruction effective moment to the slave node.

S304: The slave node receives the preset instruction that includes the instruction effective moment and that is sent by the master node, and executes the preset instruction when timing reaches the instruction effective moment.

It can be learned that S303 and S304 are correspondingly the same as S203 and S204 in the embodiment shown in FIG. 5. For details, refer to S203, S204, and related descriptions. Details are not described herein again.

The following describes still another data transmission method provided in an embodiment of this application.

In the data transmission method, the master node may acquire, in a process of training a link between the master node and the slave node or in a case in which link training is completed, a timing difference between the master node timer and the slave node timer when the link training is completed, and then send the timing difference to the slave node, so as to indicate the slave node to implement the synchronization between the slave node timer and the master node timer based on the timing difference. When the two timers are synchronized, the master node sends the preset instruction including the instruction effective moment to the slave node, so that the slave node can execute the instruction sent by the master node when timing reaches the instruction effective moment. Therefore, in a case in which an unfixed delay occurs when the master node transmits the instruction to the slave node, jitter at a moment at which the slave node executes the instruction sent by the master node is avoided.

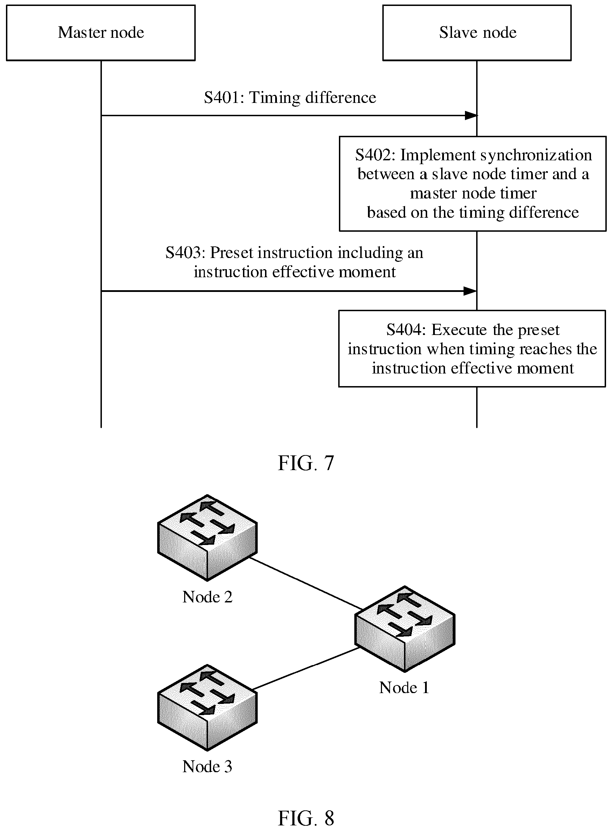

To facilitate a clear understanding of the data transmission method provided in the foregoing embodiment of this application, the following provides a schematic interaction diagram of the method. As shown in FIG. 7, the method may include the following steps.

S401: A master node obtains a timing difference in a process of training a link between the master node and a slave node or in a case in which link training is completed, and sends the timing difference to the slave node.

In a possible implementation, in a process of training a link between the master node and the slave node, the master node receives a value t1 that is of a slave node timer and that is sent by the slave node when link training is completed, and then obtains a timing difference t2-t1 through calculation based on t1 and a value t2 of a master node timer when link training is completed.

In specific implementation, after entering a training countdown state, the master node may obtain the value t2 of the master node timer through pre-calculation when the link training is completed. After entering the training countdown state, the slave node may also obtain the value t1 of the slave node timer through pre-calculation when the link training is completed. For example, when the slave node enters the training countdown state, the value t1 of the slave node timer is 3 µs, a count of remaining second training frames is 2, and duration of each second training frame is 2 µs. In this case, the slave node may obtain a value t1 = 3 µs + 2* 2 µs = 7 µs of the slave node timer through pre-calculation when the link training is completed.

In this implementation, after entering the training countdown state, the slave node may carry the value t1 of the slave node timer to a second training frame to be sent, so as to send the value t1 of the slave node timer to the master node.

In another possible implementation, in a case in which link training between the master node and the slave node is completed, the master node receives a value t1 that is of a slave node timer and that is sent by the slave node when the link training is completed. After receiving t1, the master node obtains a timing difference t2-t1 through calculation based on t1 and a value t2 of a master node timer when the link training is completed.

For example, when the link training is completed, the value t2 of the master node timer is 8 µs, and the value t1 of the slave node timer is 5 µs. In this case, the timing difference obtained by the master node is t2-t1 = 3 µs.

For ease of description, a link training process between the slave node and the master node is not described in this embodiment of this application. For details, refer to FIG. 2 and FIG. 3 and related descriptions.

S402: The slave node receives the timing difference sent by the master node, and implements synchronization between the slave node timer and the master node timer based on the timing difference.

For example, when the link training is completed, the value of the master node timer is 8 µs, the value of the slave node timer is 5 µs, and the timing difference obtained by the master node is 3 µs. It is assumed that when the value of the master node timer is 8 µs, and the value of the slave node timer is 5 µs, the master node sends the timing difference to the slave node. An unfixed delay may exist in a data transmission process, it is assumed that the delay is 2 µs, that is, the slave node receives the timing difference when timing of the master node timer reaches 10 µs, and timing of the slave node timer reaches 7 µs. The slave node adjusts the value of the slave node timer to 10 µs based on the timing difference 3 µs, and then, the value of the slave node timer is the same as the value 10 µs of the master node timer, so that the synchronization between the slave node timer and the master node timer is implemented.

S403: The master node sends a preset instruction including an instruction effective moment to the slave node.

S404: The slave node receives the preset instruction that includes the instruction effective moment and that is sent by the master node, and executes the preset instruction when timing reaches the instruction effective moment.

It can be learned that S403 and S404 are correspondingly the same as S203 and S204 in the embodiment shown in FIG. 5. For details, refer to S203, S204, and related descriptions. Details are not described herein again.

It can be learned that in the foregoing data transmission method, the master node sends, to the slave node after the slave node timer and the master node timer are synchronized, the preset instruction including the instruction effective moment, so that the slave node can execute the preset instruction when timing reaches the instruction effective moment. This avoids jitter at a moment at which the slave node executes the preset instruction sent by the master node.

Based on the foregoing data transmission method provided in this embodiment of this application, embodiments of this application further provide a synchronous instruction execution method and apparatus, and a related device, to implement synchronization between moments at which one master node controls a plurality of slave nodes to execute the instruction.

To facilitate understanding of the synchronous instruction execution method provided in this embodiment of this application, the following first describes a communication system related to the synchronous instruction execution method. FIG. 8 is a schematic diagram of a structure of a communication system according to an embodiment of this application. As shown in FIG. 8, the communication system includes a node 1, a node 2, and a node 3. The three nodes are network nodes, and the node 1 performs wired communication or wireless communication with the node 2 and the node 3 respectively. In specific implementation, the node 2 and the node 3 may or may not communicate with each other, or the node 2 may perform indirect communication with the node 3 by using the node 1. This is not specifically limited herein.

A communication network including the node 1, the node 2, and the node 3 shown in FIG. 8 may be an in-vehicle communication network, or may be a communication network such as a mobile terminal, a monitoring device, or a smart home. This is not specifically limited in this embodiment of this application.

It should be noted that, in specific implementation, the communication system shown in FIG. 8 may include more nodes, for example, may further include a node 4 and a node 5, where the node 1 respectively communicates with the node 4 and the node 5, or the node 1 is connected to the node 5 by using the node 4, and the like, which is not specifically limited herein.

Currently, in some scenarios in which one master node needs to control a plurality of slave nodes to synchronously execute an instruction, for example, to improve vehicle driving comfort, convenience, and safety, a vehicle is generally configured with an advanced driving assistant system (advanced driving assistant system, ADAS) including a plurality of cameras, or even an autonomous driving system including a plurality of cameras. A plurality of cameras are used to simultaneously collect environmental information around a vehicle, so that a driver can observe an environmental status of the vehicle or an autonomous vehicle can identify an ambient environment status of the vehicle, to achieve a plurality of complex assisted driving functions, for example, collision avoidance, a reversing camera, and a 360-degree panoramic camera. Therefore, how to implement, in the in-vehicle communication network, that one MDC controls a plurality of cameras to synchronously execute a photographing instruction has become a hot topic in the field of vehicle driving research. However, in specific implementation, an unfixed delay may occur when each slave node transmits data to the master node, and an unfixed delay may also occur when the master node transmits an instruction to each slave node. This usually causes jitter at a moment at which the master node sends an instruction to each slave node, and causes jitter at a moment at which each slave node executes the instruction. Consequently, a problem that moments at which a plurality of slave nodes execute an instruction cannot be synchronized occurs.

For ease of understanding of the problem in the foregoing synchronous instruction execution method in the conventional technology, the following uses a method in which one MDC controls a plurality of cameras to synchronously execute a photographing instruction in an existing in-vehicle communication network as an example for description.

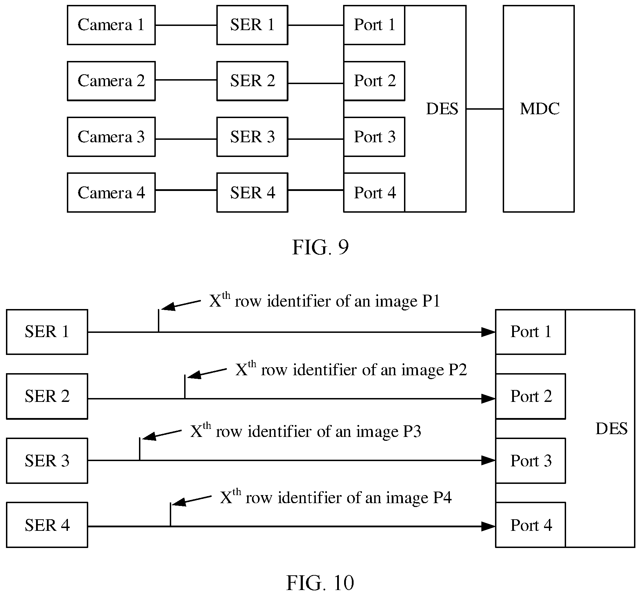

As shown in FIG. 9, in the existing in-vehicle communication network, one MDC is usually connected to one DES, one DES has four ports, the four ports are correspondingly connected to four SERs, and the four SERs each are connected to one camera. The MDC separately sends a photographing trigger instruction to the four SERs by using the DES. The four SERs respectively trigger corresponding cameras to photograph based on the photographing triggering instruction, so that one MDC controls the four cameras to synchronously photograph. It may be understood that the DES shown in FIG. 9 is equivalent to the foregoing master node that controls the plurality of slave nodes to execute an instruction synchronously, and the four SERs are equivalent to the plurality of slave nodes.

Currently, when SER 1, SER 2, SER 3, and SER 4 transmit each frame of image to the DES, each frame of image is divided into a plurality of rows of data blocks (pixels), and the data blocks are transmitted row by row. Each frame of image includes an X^{th} row identifier, and the X^{th} row identifier identifies a start location of a first data block in an X^{th} row of each frame of image. The SER 1 transmits one frame of image P1 to the DES, the SER 2 transmits one frame of image P2 to the DES, the SER 3 transmits one frame of image P3 to the DES, and the SER 4 transmits one frame of image P4 to the DES, where the four frames of images P1, P2, P3, and P4 transmitted by the four SERs to the DES are images obtained by the DES by controlling the four SERs to synchronously execute a photographing triggering instruction to trigger four cameras to synchronously photograph. The DES records a moment of receiving the X^{th} row identifier of the image P1 as T1, records a moment of receiving the X^{th} row identifier of the image P2 as T2, records a moment of receiving the X^{th} row identifier of the image P3 as T3, and records a moment of receiving the X^{th} row identifier of the image P4 as T4. After obtaining T1, T2, T3, and T4, the DES may adjust a moment at which the DES sends the photographing trigger instruction to the four SERs based on a difference between T1, T2, T3, and T4, so that the four SERs synchronously execute the photographing trigger instruction to trigger the four cameras to synchronously photograph. Details are shown in FIG. 10.

However, in a process of transmitting an image to the DES by the four SERs, some of the data blocks may be incorrectly transmitted. When the data block is incorrectly transmitted, a SER, in the four SERs, in which the data block is incorrectly transmitted reschedules transmission of the incorrectly transmitted data block. Consequently, jitter usually occurs at a moment that is of the X^{th} row identifier corresponding to the SER in which the data block is incorrectly transmitted and that is recorded by the DES, causing jitter at a moment at which the DES sends the photographing triggering instruction to the SER. As a result, it cannot be ensured that four SERs trigger the four cameras to synchronously photograph at a same moment.

Embodiments of this application provide a synchronous instruction execution method and apparatus, and a related device, to ensure that moments at which a plurality of slave nodes execute the instruction are synchronized. Specifically, for example, one MDC in the in-vehicle communication network controls a plurality of cameras to synchronously photograph. For example, one CDC controls a plurality of display devices to synchronously display.

The following describes a synchronous instruction execution method provided in an embodiment of this application by using examples.

In the synchronous instruction execution method, a master node may send a first synchronization moment to a first slave node in a process of training a first link (a link between the master node and the first slave node), to indicate the first slave node to implement synchronization between a first slave node timer and a master node timer based on the first synchronization moment, and may send a second synchronization moment to a second slave node in a process of training a second link (a link between the master node and the second slave node), to indicate the second slave node to implement synchronization between a second slave node timer and the master node timer based on the second synchronization moment. In this way, both synchronization between the first slave node timer and the master node timer and the synchronization between the second slave node timer and the master node timer is implemented.

When both the first slave node timer and the second slave node timer are synchronized with the master node timer, the master node sends a first preset instruction including a first instruction effective moment to the first slave node, and sends a second preset instruction including a second instruction effective moment to the second slave node, so that the first slave node and the second slave node can correspondingly execute the first preset instruction and the second preset instruction that are sent by the master node when timing reaches the first instruction effective moment and the second instruction effective moment. This avoids jitter at a moment at which the first slave node executes the first preset instruction sent by the master node and jitter at a moment at which the second slave node executes the second preset instruction sent by the master node. In addition, because the second instruction effective moment and the first instruction effective moment are same moments, synchronization between the moment at which the first slave node executes the first preset instruction and the moment at which the second slave node executes the second preset instruction may also be implemented.

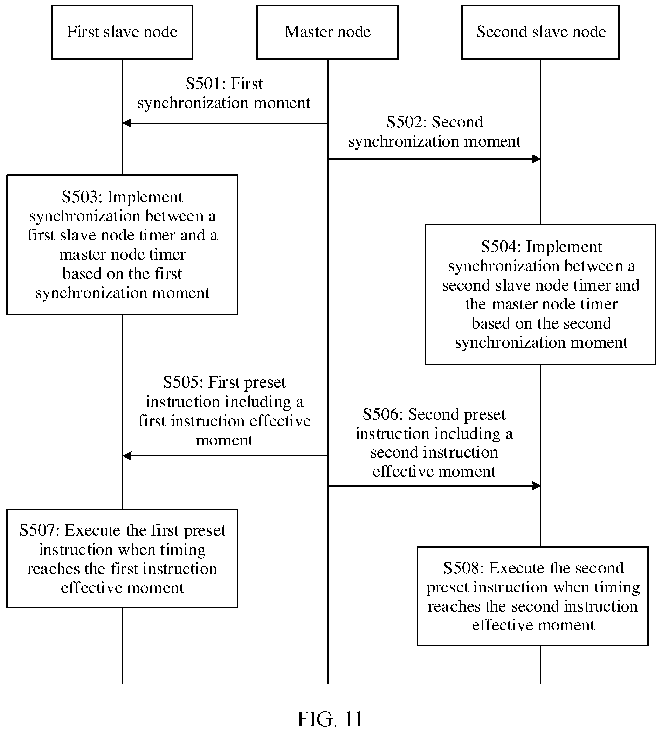

To facilitate a clear understanding of the synchronous instruction execution method provided in the foregoing embodiment of this application, the following provides a schematic interaction diagram of the method. As shown in FIG. 11, the method may include the following steps.

S501: A master node sends a first synchronization moment to a first slave node in a process of training a first link.

S502: The master node sends a second synchronization moment to a second slave node in a process of training a second link.

S503: The first slave node receives the first synchronization moment sent by the master node, and implements synchronization between a first slave node timer and a master node timer based on the first synchronization moment.

S504: The second slave node receives the second synchronization moment sent by the master node, and implements synchronization between a second slave node timer and the master node timer based on the second synchronization moment.

It can be understood that because the first slave node timer and the master node timer are synchronized, and the second slave node timer and the master node timer are synchronized, the second slave node timer and the first slave node timer are also synchronized.

S505: The master node sends a first preset instruction including a first instruction effective moment to the first slave node.

The effective moment of the first instruction is greater than or equal to a sum of a sending moment of the first preset instruction and a maximum delay of the first link, and the sending moment of the first preset instruction is a moment at which the master node sends the first preset instruction to the first slave node.

S506: The master node sends a second preset instruction including a second instruction effective moment to the second slave node.

The effective moment of the second instruction is greater than or equal to a sum of a sending moment of the second preset instruction and a maximum delay of the second link, the second instruction effective moment and the first instruction effective moment are same moments, and the sending moment of the second preset instruction is a moment at which the master node sends the second preset instruction to the second slave node.

In a specific embodiment of this application, before the master node sends the first preset instruction including the first instruction effective moment to the first slave node and sends the second preset instruction including the second instruction effective moment to the second slave node, the master node may first determine the sending moment of the first preset instruction and the sending moment of the second preset instruction, and determine the first instruction effective moment and the second instruction effective moment based on the sending moment of the first preset instruction, the sending moment of the second preset instruction, the maximum delay of the first link, and the maximum delay of the second link.

Further, the master node may determine the first instruction effective moment and the second instruction effective moment by using the following steps.

Step 1: The master node determines whether a first moment is greater than a second moment.

The first moment is a sum of the sending moment of the first preset instruction and the maximum delay of the first link, and the second moment is a sum of the sending moment of the second preset instruction and the maximum delay of the second link.

Step 2: When determining that the first moment is greater than the second moment, the master node determines the first instruction effective moment based on the first moment, where the first instruction effective moment is greater than or equal to the first moment; and when determining that the first moment is less than or equal to the second moment, the master node determines the first instruction effective moment based on the second moment, where the first instruction effective moment is greater than or equal to the second moment.

It can be learned from the foregoing description that the second instruction effective moment and the first instruction effective moment are same moments, and the first instruction effective moment is determined based on the foregoing steps, that is, the second instruction effective moment is determined.

For example, it is assumed that a moment at which the first slave node timer, the second slave node timer and the master node timer are synchronized is 20 µs, the sending moment of the first preset instruction and the sending moment of the second preset instruction that are determined by the master node are both 22 µs, the maximum delay of the first link is 2 µs, and the maximum delay of the second link is 4 µs, the master node may obtain that the first moment is 24 µs, and the second moment is 26 µs. The master node determines that the second moment is greater than the first moment, therefore, the first instruction effective moment determined by the master node only needs to be greater than or equal to the second moment 26 µs, and may be 26 µs, 27 µs, or the like. This is not limited in this embodiment of this application.

When both the first instruction effective moment and the second instruction effective moment are 26 µs, even if the first slave node receives the first preset instruction before timing reaches 24 µs or when timing reaches 24 µs, the first slave node also waits for the timing to reach 26 µs before executing the first preset instruction, the second slave node receives the second preset instruction before timing reaches 26 µs, and the second slave node also waits for the timing to reach 26 µs before executing the second preset instruction, so that synchronization between moments at which the two execute the instructions is ensured.

S507: The first slave node receives the first preset instruction that includes the first instruction effective moment and that is sent by the master node, and executes the first preset instruction when timing reaches the first instruction effective moment.

S508: The second slave node receives the second preset instruction that includes the second instruction effective moment and that is sent by the master node, and executes the second preset instruction when timing reaches the second instruction effective moment.

It can be learned from the foregoing description that the second instruction effective moment and the first instruction effective moment are same moments. Therefore, the first slave node and the second slave node execute the instructions when timing reaches the same moment, that is, synchronization between moments at which the two execute the instructions is implemented. The following describes another synchronous instruction execution method provided in an embodiment of this application.

In the synchronous instruction execution method, the master node may obtain a first timing difference in a process of training the first link or in a case in which first link training is completed, obtain a second timing difference in a process of training the second link or in a case in which second link training is completed, send the first timing difference to the first slave node to indicate the first slave node to implement the synchronization between the first slave node timer and the master node timer based on the first timing difference, and send the second timing difference to the second slave node to indicate the second slave node to implement the synchronization between the second slave node timer and the master node timer based on the second timing difference, so as to implement synchronization between the first slave node timer and the second slave node timer and the master node timer.

When both the first slave node timer and the second slave node timer are synchronized with the master node timer, the master node sends a first preset instruction including a first instruction effective moment to the first slave node, and sends a second preset instruction including a second instruction effective moment to the second slave node, so that the first slave node and the second slave node can correspondingly execute the first preset instruction and the second preset instruction that are sent by the master node when timing reaches the first instruction effective moment and the second instruction effective moment. This avoids jitter at a moment at which the first slave node executes the first preset instruction sent by the master node and jitter at a moment at which the second slave node executes the second preset instruction sent by the master node. In addition, because the second instruction effective moment and the first instruction effective moment are same moments, synchronization between the moment at which the first slave node executes the first preset instruction and the moment at which the second slave node executes the second preset instruction may also be implemented.

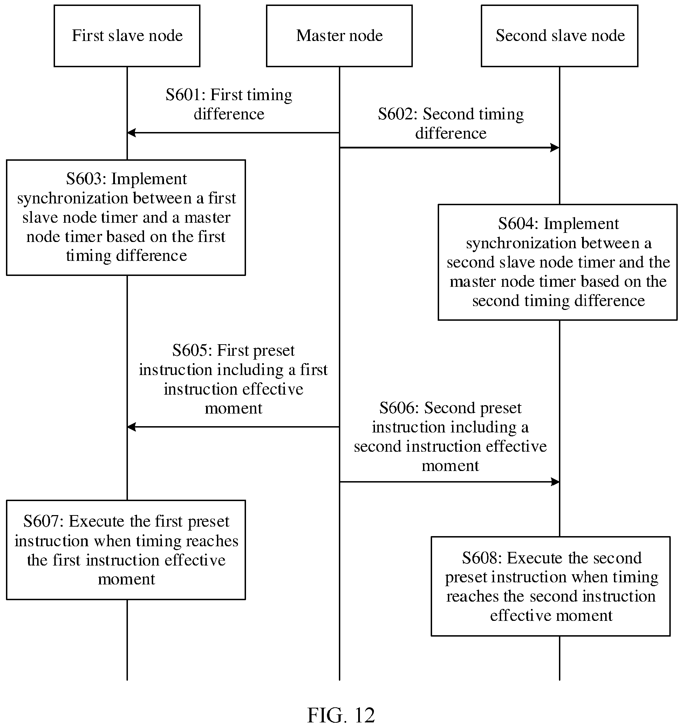

To facilitate a clear understanding of the synchronous instruction execution method provided in the foregoing embodiment of this application, the following provides a schematic interaction diagram of the synchronous instruction execution method. As shown in FIG. 12, the method may include the following steps.

S601: A master node obtains a first timing difference in a process of training a first link or in a case in which first link training is completed, and sends the first timing difference to a first slave node.

The first timing difference is a timing difference between a master node timer and a first slave node timer when the first link training is completed.

S602: The master node obtains a second timing difference in a process of training a second link or in a case in which second link training is completed, and sends the second timing difference to a second slave node.

The second timing difference is a timing difference between the master node timer and a second slave node timer when the second link training is completed.

S603: The first slave node receives the first timing difference sent by the master node, and implements synchronization between the first slave node timer and the master node timer based on the first timing difference.

S604: The second slave node receives the second timing difference sent by the master node, and implements synchronization between the second slave node timer and the master node timer based on the second timing difference.

S605: The master node sends a first preset instruction including a first instruction effective moment to the first slave node.

S606: The master node sends a second preset instruction including a second instruction effective moment to the second slave node.

S607: The first slave node receives the first preset instruction that includes the first instruction effective moment and that is sent by the master node, and executes the first preset instruction when timing reaches the first instruction effective moment.

S608: The second slave node receives the second preset instruction that includes the second instruction effective moment and that is sent by the master node, and executes the second preset instruction when timing reaches the second instruction effective moment.

It can be learned that S605 to S608 are correspondingly the same as S505 to S508 shown in FIG. 11. For details, refer to FIG. 11 and related descriptions. Details are not described herein again.

It may be understood that, in specific implementation, the following cases may further exist.

For example, the synchronization between the first slave node timer and the master node timer succeeds, and the first slave node successfully receives the first preset instruction and executes the first preset instruction at the first instruction effective moment. However, the second slave node timer and the master node timer fail to be synchronized. As a result, even if the second slave node receives the second preset instruction sent by the master node, the second slave node fails to synchronously execute the instruction with the first slave node.

For example, the synchronization between the first slave node timer and the master node timer succeeds, and the first slave node successfully receives the first preset instruction and executes the first preset instruction at the first instruction effective moment. The synchronization between the second slave node timer and the master node timer succeeds, but the second link is disconnected after the synchronization succeeds. As a result, the second slave node does not receive the second preset instruction sent by the master node, and the second slave node fails to synchronously execute the instruction with the first slave node.

For the foregoing example case, before sending a new first preset instruction to the first slave node, the master node may retrain the second link, obtain a new second synchronization moment or a new second timing difference through calculation, and send the new second synchronization moment or the new second timing difference to the second slave node, so that the second slave node may implement the synchronization between the second slave node timer and the master node timer based on the new second synchronization moment or the new second timing difference.

It may be understood that when the second slave node implements the synchronization between the second slave node timer and the master node timer based on the new second synchronization moment or the new second timing difference, because the first slave node timer and the master node timer are already synchronized, the second slave node timer and the first slave node timer are also synchronized.

When the second slave node timer, the first slave node timer, and the master node timer are synchronized, the master node may send the new first preset instruction including an effective moment of the new first instruction to the first slave node, so that the first slave node executes the new first preset instruction when timing reaches the effective moment of the new first instruction, and sends a new second preset instruction including an effective moment of the new second instruction to the second slave node, so that the second slave node executes the new second preset instruction when timing reaches the effective moment of the new second instruction. The effective moment of the new first instruction is greater than or equal to a sum of a sending moment of the new first preset instruction and a maximum delay of the first link, and the effective moment of the new second instruction is greater than or equal to a sum of a sending moment of the new second preset instruction and a maximum delay of the second link. The effective moment of the new second instruction and the effective moment of the new first instruction are same moments.

In addition, in specific implementation, it is possible that the master node may directly communicate with the first slave node, the first slave node may directly communicate with the second slave node, but the master node and the second slave node cannot directly communicate with each other. In addition, the master node cannot perform indirect communication with the second slave node by using the first slave node, but a scenario in which the first slave node and the second slave node execute instructions synchronously needs to be implemented. The communication system shown in FIG. 8 is still used as an example. It is assumed that the node 2 is the master node, the node 1 is the first slave node, and the node 3 is the second slave node, the node 2 may directly communicate with the node 1, the node 1 may directly communicate with the node 3, but the node 2 cannot directly communicate with the node 3, and cannot communicate with the node 3 by using the node 1 either. However, synchronization between moments at which the node 1 and the node 3 execute an instruction needs to be implemented. In this case, the following two examples of the synchronous instruction execution method may be used to implement synchronization between moments at which the first slave node and the second slave node execute an instruction.

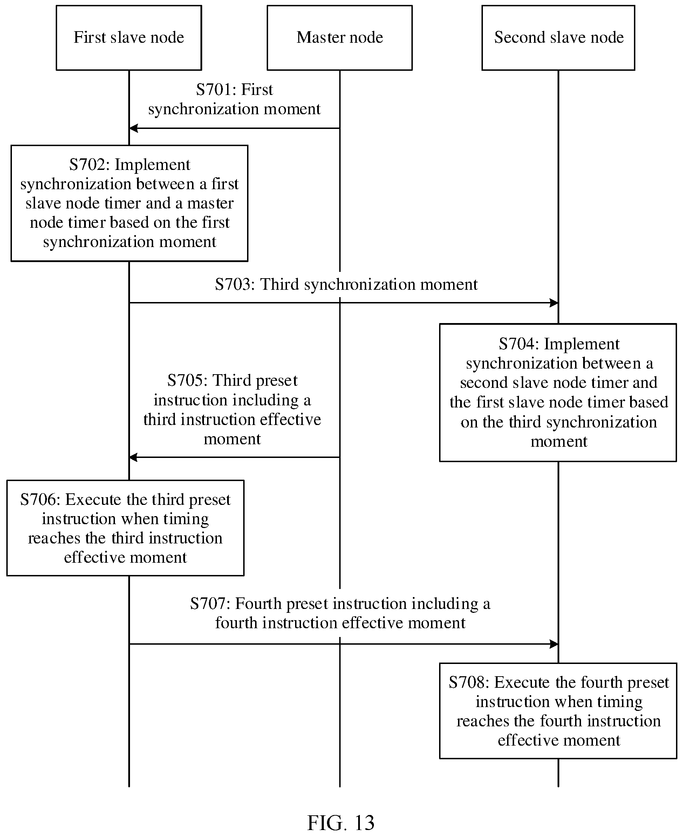

As shown in FIG. 13, a first method may include the following steps.

S701: A master node sends a first synchronization moment to a first slave node in a process of training a first link.

S702: The first slave node receives the first synchronization moment sent by the master node, and implements synchronization between a first slave node timer and a master node timer based on the first synchronization moment.

S703: The first slave node sends a third synchronization moment to a second slave node in a process of training a third link.

The third link is a link between the first slave node and the second slave node.

S704: The second slave node receives the third synchronization moment sent by the first slave node, and implements synchronization between a second slave node timer and the first slave node timer based on the third synchronization moment.

S705: The master node sends a third preset instruction including a third instruction effective moment to the first slave node.

The effective moment of the third instruction is greater than or equal to a sum of a sending moment of the third preset instruction, a maximum delay of the first link, and a maximum delay of the third link, and the sending moment of the third preset instruction is a moment at which the master node sends the third preset instruction to the first slave node.

S706: The first slave node receives the third preset instruction that includes the third instruction effective moment and that is sent by the master node, and executes the third preset instruction when timing reaches the third instruction effective moment.

S707: The first slave node sends a fourth preset instruction including a fourth instruction effective moment to the second slave node.

The effective moment of the fourth instruction is greater than or equal to a sum of a sending moment of the fourth preset instruction and a maximum delay of the third link, the fourth instruction effective moment and the third instruction effective moment are same moments, and the sending moment of the fourth preset instruction is a moment at which the first slave node sends the fourth preset instruction to the second slave node.

S708: The second slave node receives the fourth preset instruction that includes the fourth instruction effective moment and that is sent by the first slave node, and executes the fourth preset instruction when timing reaches the fourth instruction effective moment.

In a possible implementation, before the master node sends the third preset instruction including the third instruction effective moment to the first slave node, the master node may first determine the sending moment of the third preset instruction, determine the third instruction effective moment based on the sending moment of the third preset instruction, the maximum delay of the first link, and the maximum delay of the third link. After the master node sends, to the first slave node, the third preset instruction including the third instruction effective moment, the first slave node determines the sending moment of the fourth preset instruction based on the third instruction effective moment.

Further, the third instruction effective moment determined by the master node may be greater than or equal to the sending moment of the third preset instruction + the maximum delay of the first link + the maximum delay of the third link.

It can be learned from the foregoing description that the fourth instruction effective moment and the third instruction effective moment are same moments, and the third instruction effective moment is determined based on the foregoing steps, that is, the fourth instruction effective moment is determined.

For another example, a moment at which the first slave node timer, the second slave node timer and the master node timer are synchronized is 20 µs, the sending moment of the third preset instruction determined by the master node is 22 µs, the maximum delay of the first link is 2 µs, and the maximum delay of the third link is 4 µs. When the sending moment 22 µs of the third preset instruction + the maximum delay 2 µs of the first link + the maximum delay 4 µs of the third link = 28 µs, the third instruction effective moment determined by the master node only needs to be greater than or equal to 28 µs.

When both the third instruction effective moment and the fourth instruction effective moment are 28 µs, because the sending moment of the third preset instruction is 22 µs, and the maximum delay of the first link is 2 µs, the first slave node may receive the third preset instruction including the effective moment 28 µs of the third instruction before timing reaches 24 µs or when timing reaches 24 µs. It is assumed that the first slave node receives the third preset instruction when timing reaches 24 µs, because the maximum delay of the third link is 4 µs, the first slave node needs to ensure that the second slave node also executes the fourth preset instruction when timing reaches 28 µs. In this case, the first slave node may determine the sending moment of the fourth preset instruction as 24 µs. In this way, the second slave node may receive the fourth preset instruction before timing reaches 28 µs or when timing reaches 28 µs, and then the second slave node may execute the fourth preset instruction when timing reaches 28 µs, which is synchronous with the execution of the third preset instruction by the first slave node when timing reaches 28 µs.

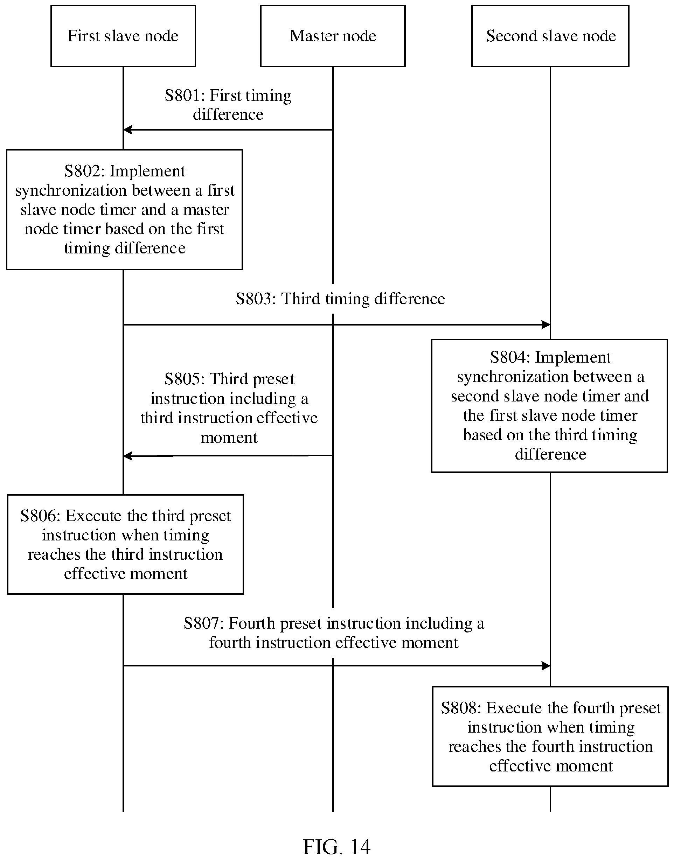

As shown in FIG. 14, a second method may include the following steps.

S801: A master node obtains a first timing difference in a process of training a first link or in a case in which first link training is completed, and sends the first timing difference to a first slave node.

S802: The first slave node receives the first timing difference sent by the master node, and implements synchronization between a first slave node timer and a master node timer based on the first timing difference.

S803: The first slave node obtains a third timing difference in a process of training a third link or in a case in which third link training is completed, and sends the third timing difference to a second slave node.

The third timing difference is a timing difference between the first slave node timer and a second slave node timer when the third link training is completed.

S804: The second slave node receives the third timing difference sent by the first slave node, and implements synchronization between the second slave node timer and the first slave node timer based on the third timing difference.

S805: The master node sends a third preset instruction including a third instruction effective moment to the first slave node.

S806: The first slave node receives the third preset instruction that includes the third instruction effective moment and that is sent by the master node, and executes the third preset instruction when timing reaches the third instruction effective moment.

S807: The first slave node sends a fourth preset instruction including a fourth instruction effective moment to the second slave node.

S808: The second slave node receives the fourth preset instruction that includes the fourth instruction effective moment and that is sent by the first slave node, and executes the fourth preset instruction when timing reaches the fourth instruction effective moment.

It can be learned that S805 to S808 are correspondingly the same as S705 to S708 shown in FIG. 13. For details, refer to FIG. 13 and related descriptions. Details are not described herein again.

It may be understood that, in specific implementation, the following cases may further exist.

For example, the synchronization between the first slave node timer and the master node timer succeeds, and the first slave node successfully receives the third preset instruction and executes the third preset instruction at the third instruction effective moment. However, the second slave node timer and the first slave node timer fail to be synchronized. As a result, even if the second slave node receives the fourth preset instruction, the second slave node fails to synchronously execute the instruction with the first slave node.

For example, the synchronization between the first slave node timer and the master node timer succeeds, and the first slave node successfully receives the third preset instruction and executes the third preset instruction at the third instruction effective moment. The synchronization between the second slave node timer and the first slave node timer succeeds, but the third link is disconnected after the synchronization succeeds. As a result, the second slave node does not receive the fourth preset instruction sent by the first slave node, and the second slave node fails to synchronously execute the instruction with the first slave node.

For the foregoing example case, the first slave node may retrain the third link, obtain a new third synchronization moment or a new third timing difference through calculation, and send the new third synchronization moment or the new third timing difference to the second slave node, so that the second slave node can implement the synchronization between the second slave node timer and the first slave node timer based on the new third synchronization moment or the new third timing difference.

It may be understood that when the second slave node implements the synchronization between the second slave node timer and the first slave node timer based on the new third synchronization moment or the new third timing difference, because the first slave node timer and the master node timer are already synchronized, the second slave node timer and the master node timer are also synchronized.

When the second slave node timer, the first slave node timer, and the master node timer are synchronized, the master node may send a new third preset instruction including an effective moment of the new third instruction to the first slave node, and after the first slave node receives the new third preset instruction, the first slave node may execute the new third preset instruction when timing reaches the effective moment of the new third instruction, and send a new fourth preset instruction including an effective moment of the new fourth instruction to the second slave node, so that the second slave node executes the new fourth preset instruction when timing reaches the effective moment of the new fourth instruction. The effective moment of the new third instruction is greater than or equal to a sum of a sending moment of the new third preset instruction, a maximum delay of the first link, and a maximum delay of the third link. The effective moment of the new fourth instruction is greater than or equal to a sum of a moment at which the first slave node sends the new fourth preset instruction to the second slave node and a maximum delay of the third link, and the effective moment of the new fourth instruction and the effective moment of the new third instruction are same moments.

In specific implementation, it is possible that the master node may directly communicate with the first slave node, the first slave node may directly communicate with the second slave node, but the master node and the second slave node cannot directly communicate with each other. In addition, the master node cannot perform indirect communication with the second slave node by using the first slave node, but a scenario in which the first slave node and the second slave node execute instructions synchronously needs to be implemented. The communication system shown in FIG. 8 is still used as an example. It is assumed that the node 2 is the master node, the node 1 is the first slave node, and the node 3 is the second slave node, the node 2 may directly communicate with the node 1, the node 1 may directly communicate with the node 3, and the node 2 cannot directly communicate with the node 3, but can indirectly communicate with the node 3 by using the node 1. Synchronization between moments at which the node 1 and the node 3 execute an instruction needs to be implemented. In this case, the following two examples of the synchronous instruction execution method may be used to implement synchronization between moments at which the first slave node and the second slave node execute an instruction.

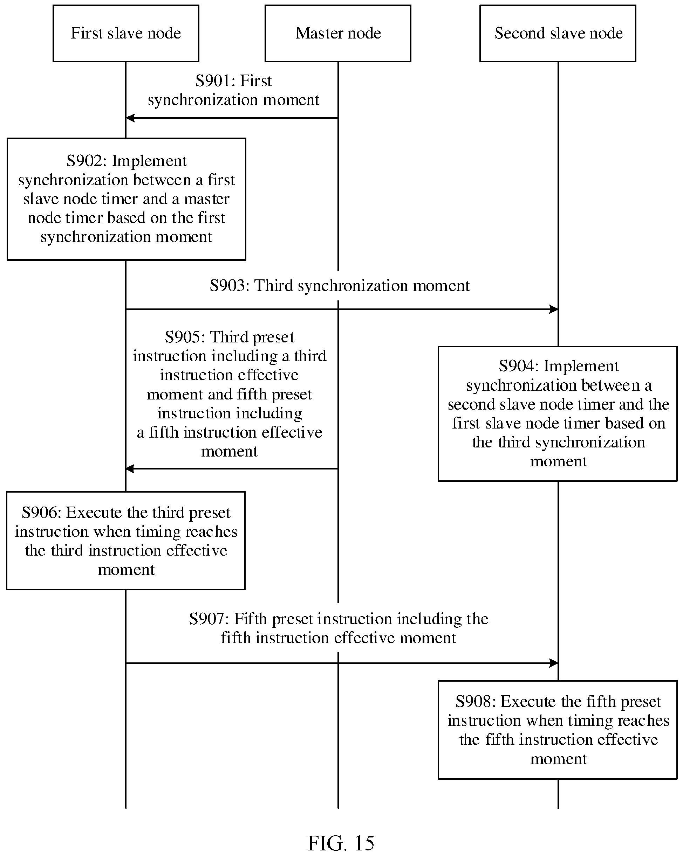

As shown in FIG. 15, a first method may include the following steps.

S901: A master node sends a first synchronization moment to a first slave node in a process of training a first link.

S902: The first slave node receives the first synchronization moment sent by the master node, and implements synchronization between a first slave node timer and a master node timer based on the first synchronization moment.

S903: The first slave node sends a third synchronization moment to a second slave node in a process of training a third link.

S904: The second slave node receives the third synchronization moment sent by the first slave node, and implements synchronization between a second slave node timer and the first slave node timer based on the third synchronization moment.

S905: The master node sends, to the first slave node, a third preset instruction including a third instruction effective moment and a fifth preset instruction including a fifth instruction effective moment.

S906: The first slave node receives the third preset instruction that includes the third instruction effective moment and that is sent by the master node, the fifth preset instruction that includes the fifth instruction effective moment and that is sent by the master node, and executes the third preset instruction when timing reaches the third instruction effective moment.

S907: The first slave node sends the fifth preset instruction including the fifth instruction effective moment to the second slave node.

S908: The second slave node receives the fifth preset instruction that includes the fifth instruction effective moment and that is sent by the first slave node, and executes the fifth preset instruction when timing reaches the fifth instruction effective moment.

In this embodiment, before the master node sends the third preset instruction including the third instruction effective moment and the fifth preset instruction including the fifth instruction effective moment to the first slave node, the master node may first determine a sending moment of the third preset instruction, then determine a sending moment of the fifth preset instruction based on the sending moment of the third preset instruction and a maximum delay of the first link, and finally determine the fifth instruction effective moment based on the sending moment of the fifth preset instruction and a maximum delay of the third link. The sending moment of the fifth preset instruction is a moment at which the first slave node sends the fifth preset instruction to the second slave node.

Further, the sending moment of the fifth preset instruction determined by the master node is greater than or equal to a sum of the sending moment of the third preset instruction and the maximum delay of the first link, and the fifth instruction effective moment determined by the master node is greater than or equal to a sum of the sending moment of the fifth preset instruction and the maximum delay of the third link.

It can be learned from the foregoing description that the third instruction effective moment and the fifth instruction effective moment are same moments, and the fifth instruction effective moment is determined based on the foregoing steps, that is, the third instruction effective moment is determined.

In specific implementation, the fifth preset instruction sent by the master node to the first slave node may include the sending moment of the fifth preset instruction, and the sending moment of the fifth preset instruction is used by the first slave node to send the fifth preset instruction to the second slave node when timing reaches the sending moment of the fifth preset instruction.

For another example, a moment at which the first slave node timer, the second slave node timer and the master node timer are synchronized is 20 µs, the sending moment of the third preset instruction determined by the master node is 22 µs, the maximum delay of the first link is 2 µs, and the maximum delay of the third link is 4 µs. When the sending moment 22 µs of the third preset instruction + the maximum delay 2 µs of the first link = 24 µs, the master node may determine that the sending moment of the fifth preset instruction only needs to be greater than or equal to 24 µs.

When the sending moment of the fifth preset instruction is 24 µs, the sending moment 24 µs of the fifth preset instruction + the maximum delay 4 µs of the third link = 28 µs. In this case, the fifth instruction effective moment determined by the master node only needs to be greater than or equal to 28 µs.

When both the fifth instruction effective moment and the third instruction effective moment are 28 µs, because the sending moment of the third preset instruction is 22 µs, and the maximum delay of the first link is 2 µs, the first slave node may receive the third preset instruction including the effective moment 28 µs of the third instruction and the fifth preset instruction including the effective moment 28 µs of the fifth instruction before timing reaches 24 µs or when timing reaches 24 µs. It is assumed that the first slave node receives the third preset instruction and the fifth preset instruction when timing reaches 24 µs, because the sending moment of the fifth preset instruction is 24 µs, the first slave node sends the fifth preset instruction to the second slave node when timing reaches 24 µs. Because the maximum delay of the third link is 4 µs, the second slave node may receive the fifth preset instruction before timing reaches 28 µs or when timing reaches 28 µs, and then the second slave node may execute the fifth preset instruction when timing reaches 28 µs, which is synchronous with the execution of the third preset instruction by the first slave node when timing reaches 28 µs.

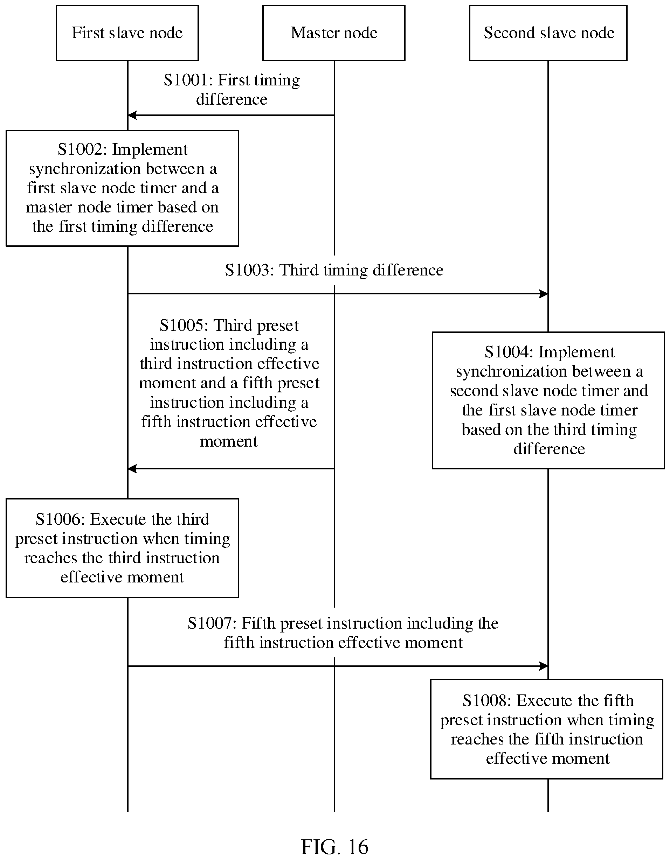

As shown in FIG. 16, a second method may include the following steps.

S1001: A master node obtains a first timing difference in a process of training a first link or in a case in which first link training is completed, and sends the first timing difference to a first slave node.

S1002: The first slave node receives the first timing difference sent by the master node, and implements synchronization between a first slave node timer and a master node timer based on the first timing difference.

S1003: The first slave node obtains a third timing difference in a process of training a third link or in a case in which third link training is completed, and sends the third timing difference to a second slave node.

S1004: The second slave node receives the third timing difference sent by the first slave node, and implements synchronization between a second slave node timer and the first slave node timer based on the third timing difference.

S1005: The master node sends, to the first slave node, a third preset instruction including a third instruction effective moment and a fifth preset instruction including a fifth instruction effective moment.

S1006: The first slave node receives the third preset instruction that includes the third instruction effective moment and that is sent by the master node, the fifth preset instruction that includes the fifth instruction effective moment and that is sent by the master node, and executes the third preset instruction when timing reaches the third instruction effective moment.

S1007: The first slave node sends the fifth preset instruction including the fifth instruction effective moment to the second slave node.

S1008: The second slave node receives the fifth preset instruction that includes the fifth instruction effective moment and that is sent by the first slave node, and executes the fifth preset instruction when timing reaches the fifth instruction effective moment.

It can be learned that S1005 to S1008 are correspondingly the same as S905 to S908 shown in FIG. 15. For details, refer to FIG. 15 and related descriptions. Details are not described herein again.

It may be understood that, in specific implementation, the following cases may further exist.

For example, the synchronization between the first slave node timer and the master node timer succeeds, and the first slave node successfully receives the third preset instruction and executes the third preset instruction at the third instruction effective moment. However, the second slave node timer and the first slave node timer fail to be synchronized. As a result, even if the second slave node receives the fifth preset instruction, the second slave node fails to synchronously execute the instruction with the first slave node.

For example, the synchronization between the first slave node timer and the master node timer succeeds, and the first slave node successfully receives the third preset instruction and executes the third preset instruction at the third instruction effective moment. The synchronization between the second slave node timer and the first slave node timer succeeds, but the third link is disconnected after the synchronization succeeds. As a result, the second slave node does not receive the fifth preset instruction sent by the first slave node, and the second slave node fails to synchronously execute the instruction with the first slave node.

For example, synchronization between the first slave node timer and the master node timer succeeds, synchronization between the second slave node timer and the first slave node timer succeeds, and the first slave node successfully receives the third preset instruction and executes the third preset instruction at the third instruction effective moment, but the first slave node fails to receive the fifth preset instruction. As a result, the first slave node fails to send the fifth preset instruction to the second slave node, and a case in which the second slave node fails to synchronously execute the instruction with the first slave node is caused.

For the foregoing two example cases, the first slave node may retrain the third link, obtain a new third synchronization moment or a new third timing difference through calculation, and send the new third synchronization moment or the new third timing difference to the second slave node, so that the second slave node can implement the synchronization between the second slave node timer and the first slave node timer based on the new third synchronization moment or the new third timing difference.

It may be understood that when the second slave node implements the synchronization between the second slave node timer and the first slave node timer based on the new third synchronization moment or the new third timing difference, because the first slave node timer and the master node timer are already synchronized, the second slave node timer and the master node timer are also synchronized.

In a case in which the second slave node timer, the first slave node timer, and the master node timer are synchronized, the master node may send a new third preset instruction including an effective moment of the new third instruction, and a new fifth preset instruction including an effective moment of the new fifth instruction to the first slave node, and after the first slave node receives the new third preset instruction and the new fifth preset instruction, the first slave node may execute the new third preset instruction when timing reaches the effective moment of the new third instruction, and send the new fifth preset instruction including the effective moment of the new fifth instruction to the second slave node, so that the second slave node executes the new fifth preset instruction when timing reaches the effective moment of the new fifth instruction. The effective moment of the new third instruction is greater than or equal to a sum of a sending moment of the new third preset instruction, a maximum delay of the first link, and a maximum delay of the third link. The effective moment of the new fifth instruction is greater than or equal to a sum of a moment at which the first slave node sends the new fifth preset instruction to the second slave node and a maximum delay of the third link, and the effective moment of the new fifth instruction and the effective moment of the new third instruction are same moments.

For the foregoing last example case, because the second slave node timer, the second slave node timer, and the master node timer are already synchronized, the master node may only need to send the new third preset instruction including the effective moment of the new third instruction, and the new fifth preset instruction including the effective moment of the new fifth instruction to the first slave node without performing a process such as link training or timer synchronization, and after the first slave node receives the new third preset instruction and the new fifth preset instruction, the first slave node may execute the new third preset instruction when timing reaches the effective moment of the new third instruction, and send the new fifth preset instruction including the effective moment of the new fifth instruction to the second slave node, so that the second slave node executes the new fifth preset instruction when timing reaches the effective moment of the new fifth instruction.

In specific implementation, the first preset instruction, the second preset instruction, the third preset instruction, the fourth preset instruction, and the fifth preset instruction in the embodiments shown in FIG. 11 to FIG. 16 may be any instruction, for example, a photographing instruction instructing a camera to photograph, or a display instruction instructing a display device to perform display. This is not specifically limited herein. It may be understood that when the first preset instruction, the second preset instruction, the third preset instruction, the fourth preset instruction, and the fifth preset instruction are photographing instructions, the synchronous instruction execution method provided in the foregoing embodiments of this application can implement synchronous photographing by the first slave node and the second slave node. When the first preset instruction, the second preset instruction, the third preset instruction, the fourth preset instruction, and the fifth preset instruction are all display instructions, the synchronous instruction execution method provided in the foregoing embodiments of this application can implement synchronous display by the first slave node and the second slave node.

It should be noted that, for ease of description, the foregoing embodiments shown in FIG. 11 to FIG. 16 do not describe a training process of the first link, a training process of the second link, and a training process of the third link in detail. The foregoing link training process is similar to the link training process described in FIG. 2 and FIG. 3. For details, refer to FIG. 2, FIG. 3, and related descriptions. Details are not described herein again.

For ease of description, in the embodiments shown in FIG. 11, FIG. 13, and FIG. 15, there is no description in detail about a synchronization process such as a process that the first slave node implements the synchronization between the first slave node timer and the master node timer based on the first synchronization moment, a process that the second slave node implements the synchronization between the second slave node timer and the master node timer based on the second synchronization moment, and a process that the second slave node implements the synchronization between the second slave node timer and the first slave node timer based on the third synchronization moment. The foregoing process of implementing timer synchronization by a node is similar to the process of implementing, by the slave node, the synchronization between the slave node timer and the master node timer based on the synchronization moment described in FIG. 4. For details, refer to FIG. 4 and related descriptions. Details are not described herein again.

For ease of description, in the embodiments shown in FIG. 12, FIG. 14, and FIG. 16, there is no description in detail about a process of obtaining a timing difference, such as a process of obtaining the first timing difference by the master node, a process of obtaining the second timing difference by the master node, and a process of obtaining the third timing difference by the first slave node. The foregoing process of obtaining the timing difference by the node is similar to the process of obtaining the timing difference by the master node shown in FIG. 6. For details, refer to FIG. 6 and related descriptions. Details are not described herein again. In the embodiments shown in FIG. 12, FIG. 14, and FIG. 16, there is no description in detail about a synchronization process such as a process that the first slave node implements the synchronization between the first slave node timer and the master node timer based on the first timing difference, a process that the second slave node implements the synchronization between the second slave node timer and the master node timer based on the second timing difference, and a process that the second slave node implements the synchronization between the second slave node timer and the first slave node timer based on the third timing difference. The foregoing process of implementing timer synchronization by the node is similar to the process of implementing the synchronization between the slave node timer and the master node timer based on the timing difference described in FIG. 7. For details, refer to FIG. 7 and related descriptions. Details are not described herein again.

With reference to the related descriptions in the foregoing embodiments, the following describes a related apparatus to which this application is applicable.

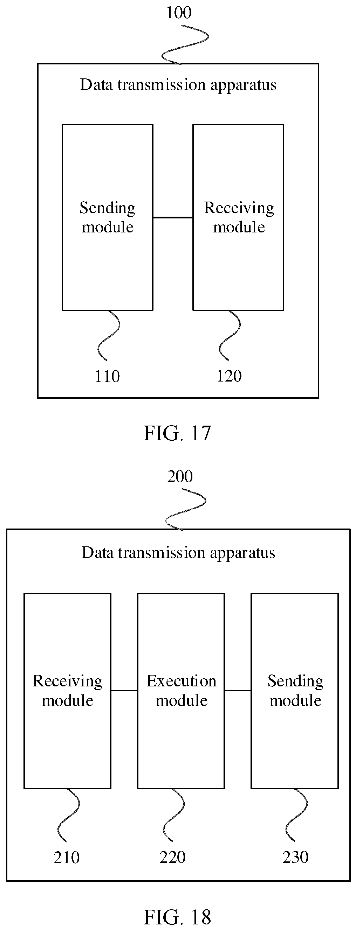

FIG. 17 is a schematic diagram of a structure of a data transmission apparatus according to an embodiment of this application. The data transmission apparatus may be applied to the foregoing master node. As shown in FIG. 17, the data transmission apparatus 100 includes a sending module 110, and further include a receiving module 120 on the basis of including the sending module 110.

The sending module 110 is configured to send data to another device. For example, the sending module 110 is configured to perform steps S201 and S203 that are performed by the master node in the embodiment shown in FIG. 4, or is configured to perform steps S401 and S403 that are performed by the master node in the embodiment shown in FIG. 7. For another example, the sending module 110 is configured to perform steps S501, S502, S505, and S506 that are performed by the master node in the embodiment shown in FIG. 11.

The receiving module 120 is configured to receive data sent by another device. For example, the receiving module 120 is configured to receive a synchronization moment sent by a slave node in the embodiment shown in FIG. 6.

Optionally, the data transmission apparatus 100 may further include a synchronization module (not shown in FIG. 17), configured to implement synchronization between a master node timer and another device timer. For example, the synchronization module is configured to perform step S302 performed by the master node in FIG. 6.

Optionally, the data transmission apparatus 100 may further include a storage module (not shown in FIG. 17) and a processing module (not shown in FIG. 17). The storage module is configured to store program code and data of the data transmission apparatus 100, for example, store program code used to implement synchronization between the master node timer and a slave node timer based on the received synchronization moment. The processing module is configured to invoke the program code in the storage module to implement an implementation step performed by the data transmission apparatus 100, and/or is configured to perform another content step of the technology described in this application.

The processing module may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or a combination thereof. The processor may implement or execute various example logical blocks, modules, and circuits described with reference to content disclosed in this application. Alternatively, the processor may be a combination of processors implementing a computing function, for example, a combination of one or more microprocessors. The sending module 110 and the receiving module 120 may be a communication interface, a transceiver, a transceiver circuit, or the like. The communication interface is a general term, and may include one or more interfaces. The storage module may be a memory, or another service or module configured to provide a storage function.

Specifically, for specific implementation of various operations performed by the apparatus 100, refer to specific operations performed by the master node in the foregoing method embodiment. Details are not described herein again.

It should be understood that the data transmission apparatus 100 is merely an example provided in this embodiment of this application. In addition, the data transmission apparatus 100 may have more or fewer components than those shown in FIG. 17, may combine two or more components, or may have different component configurations for implementation.

FIG. 18 is a schematic diagram of a structure of a data transmission apparatus according to an embodiment of this application. The data transmission apparatus may be applied to the foregoing first slave node. As shown in FIG. 18, the data transmission apparatus 200 includes a receiving module 210 and an execution module 220, and may further include a sending module 230 on the basis of including the receiving module 210 and the execution module 220.

The receiving module 210 is configured to receive data sent by another device. For example, the receiving module 210 is configured to receive the first synchronization moment sent by the master node in the embodiment shown in FIG. 11 or receive the first timing difference sent by the master node in the embodiment shown in FIG. 13.

The execution module 220 is configured to execute an instruction sent by another device. For example, the execution module 230 is configured to perform step S706 performed by the first slave node in the embodiment shown in FIG. 13.

The sending module 230 is configured to send data to another device. For example, the sending module 230 is configured to perform step S703 and step S707 that are performed by the first slave node in the embodiment shown in FIG. 13, or is configured to perform step S1003 and step S1007 that are performed by the first slave node in the embodiment shown in FIG. 16.

Optionally, the data transmission apparatus 200 may further include a synchronization module (not shown in FIG. 18), configured to implement synchronization between a first slave node timer and another device timer. For example, the synchronization module is configured to perform step S503 performed by the first slave node in the embodiment shown in FIG. 11.

Optionally, the data transmission apparatus 200 may further include a storage module and a processing module (not shown in FIG. 18). The storage module is configured to store program code and data of the data transmission apparatus 200, for example, store program code used to implement synchronization between the first slave node timer and a master node timer based on a received third synchronization moment. The processing module is further configured to invoke the program code in the storage module to implement an implementation step performed by the data transmission apparatus 200, and/or is configured to perform another content step of the technology described in this application.

Specifically, for specific implementation of various operations performed by the apparatus 200, refer to specific operations in the foregoing method embodiment. Details are not described herein.

It should be understood that the data transmission apparatus 200 is merely an example provided in this embodiment of this application. In addition, the data transmission apparatus 200 may have more or fewer components than those shown in FIG. 18, may combine two or more components, or may have different component configurations for implementation.

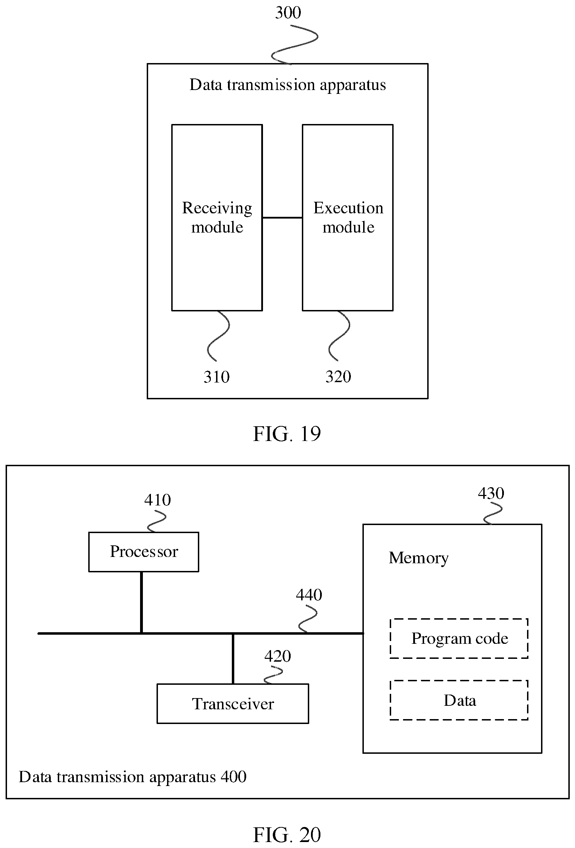

FIG. 19 is a schematic diagram of a structure of a data transmission apparatus according to an embodiment of this application. The data transmission apparatus may be applied to the foregoing second slave node. As shown in FIG. 19, the data transmission apparatus 300 includes a receiving module 310 and an execution module 320.

The receiving module 310 is configured to receive data sent by another device. For example, the receiving module 210 is configured to receive the second synchronization moment sent by the master node in the embodiment shown in FIG. 11 or receive the second timing difference sent by the master node in the embodiment shown in FIG. 12.

The execution module 320 is configured to execute an instruction sent by another device. For example, the execution module 230 is configured to perform step S708 performed by the second slave node in the embodiment shown in FIG. 13.

Optionally, the data transmission apparatus 300 may further include a sending module (not shown in FIG. 19), configured to send data to another device.

Optionally, the data transmission apparatus 300 may further include a synchronization module (not shown in FIG. 19), configured to implement synchronization between a second slave node timer and another device timer. For example, the synchronization module is configured to perform step S504 performed by the second slave node in the embodiment shown in FIG. 11.

Optionally, the data transmission apparatus 300 may further include a storage module and a processing module (not shown in FIG. 19). The storage module is configured to store program code and data of the data transmission apparatus 300, for example, store program code used to implement synchronization between the second slave node timer and the master node timer based on a received second synchronization moment. The processing module is further configured to invoke the program code in the storage module to implement an implementation step performed by the data transmission apparatus 300, and/or is configured to perform another content step of the technology described in this application.

Specifically, for specific implementation of various operations performed by the apparatus 300, refer to specific operations in the foregoing method embodiment. Details are not described herein.

It should be understood that the data transmission apparatus 300 is merely an example provided in this embodiment of this application. In addition, the data transmission apparatus 300 may have more or fewer components than those shown in FIG. 19, may combine two or more components, or may have different component configurations for implementation.

FIG. 20 is a schematic diagram of a structure of a data transmission apparatus according to an embodiment of this application. The data transmission apparatus may be applied to the foregoing master node, the first slave node, or the second slave node. The data transmission apparatus 400 includes a processor 410, a transceiver 420, and a memory 430. The processor 410, the transceiver 420, and the memory 430 are connected to each other by using a bus 440.

The processor 410 may include one or more general-purpose processors, such as a CPU, or a combination of a CPU and a hardware chip. The hardware chip may be an ASIC, a programmable logic device (programmable logic device, PLD), or a combination thereof. The PLD may be a complex programmable logic device (complex programmable logic device, CPLD), an FPGA, generic array logic (generic array logic, GAL), or any combination thereof.

The transceiver 420 is configured to communicate with another device.

The memory 430 may include a volatile memory (volatile memory), such as a random access memory (random access memory, RAM). The memory may also include a non-volatile memory (non-volatile memory), such as a read-only memory (read-only memory, ROM), a flash memory (flash memory), a hard disk drive (hard disk drive, HDD), or a solid-state drive (solid-state drive, SSD). The memory 430 may further include a combination of the foregoing types of memories.

The memory 430 may be configured to store program code and data, so that the processor 410 invokes the program code stored in the memory 430 to implement functions of modules such as a sending module and/or a receiving module in embodiments of this application.

The bus 440 may be a peripheral component interconnect (peripheral component interconnect, PCI) bus, an extended industry standard architecture (extended industry standard architecture, EISA for short) bus, or the like. The bus 440 may be classified into an address bus, a data bus, a control bus, and the like. For ease of representation, only one thick line is used to represent the bus in FIG. 20, but this does not mean that there is only one bus or only one type of bus.

It should be understood that the data transmission apparatus 400 shown in FIG. 20 may be a chip or a circuit, for example, a chip or a circuit that may be disposed in a terminal device or a communication apparatus. The transceiver 420 may alternatively be a communication interface. In an implementation, it may be considered that functions of the transceiver 420 are implemented by using a transceiver circuit or a dedicated transceiver chip.

Specifically, for specific implementation of various operations performed by the data transmission apparatus 400, refer to specific operations performed by the master node or the slave node in the foregoing method embodiment. Details are not described herein again.

It should be understood that the data transmission apparatus 400 is merely an example provided in this embodiment of this application. In addition, the data transmission apparatus 400 may have more or fewer components than those shown in FIG. 20, may combine two or more components, or may have different component configurations for implementation.

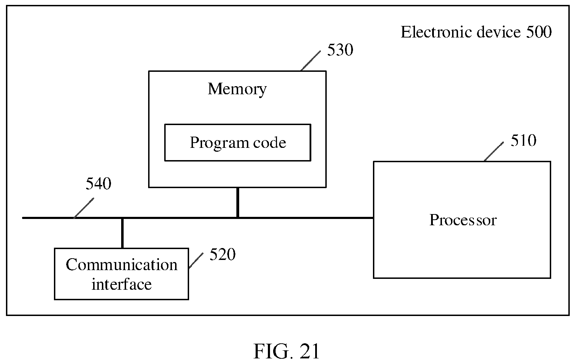

Embodiments of this application further provide an electronic device. FIG. 21 is a schematic diagram of a structure of an electronic device 500 according to an embodiment of this application. As shown in FIG. 21, the electronic device 500 includes a processor 510, a communication interface 520, and a memory 530. The processor 510, the communication interface 520, and the memory 530 may be connected to each other by using an internal bus 540, or may implement communication by using another means such as wireless transmission.

In this embodiment of this application, that the processor 510, the communication interface 520, and the memory 530 are connected to each other by using the bus 540 is used as an example. The bus 540 may be a PCI bus, an EISA bus, or the like. The bus 540 may be classified into an address bus, a data bus, a control bus, and the like. For ease of representation, only one thick line is used to represent the bus in FIG. 21, but this does not mean that there is only one bus or only one type of bus.

The processor 510 may include at least one general-purpose processor such as a CPU, or a combination of a CPU and a hardware chip. The hardware chip may be an ASIC, a PLD, or a combination thereof. The PLD may be a CPLD, an FPGA, a GAL, or any combination thereof. The processor 510 executes various types of digital storage instructions, for example, software or firmware programs stored in the memory 530, so that the electronic device 500 can provide a wide variety of services.

The memory 530 is configured to store program code, and the processor 510 controls execution of the program code, to perform the processing steps performed by the master node, the first slave node, and the second slave node in any one of the foregoing embodiments in FIG. 11 to FIG. 16. For details, refer to related descriptions of the embodiments shown in any one of FIG. 11 to FIG. 16. Details are not described herein again.

The memory 530 may include a volatile memory, such as a RAM. The memory 530 may also include a non-volatile memory, for example, a ROM, a flash memory (Flash Memory), an HDD, or an SSD. The memory 530 may further include a combination of the foregoing types.

The communication interface 520 may be a wired interface (for example, an Ethernet interface), an internal interface (for example, a peripheral component interconnect express (Peripheral Component Interconnect express, PCIE) bus interface), a wired interface (for example, an Ethernet interface), or a wireless interface (for example, a cellular network interface or a wireless local area network interface) that is configured to communicate with another device or module.

It should be noted that FIG. 21 is merely a possible implementation of embodiments of this application. In actual application, the electronic device may further include more or fewer components. This is not limited herein. For content that is not shown or not described in this embodiment of this application, refer to related descriptions in the embodiments shown in FIG. 11 to FIG. 16. Details are not described herein again.

Embodiments of this application further provide a vehicle. The vehicle may include the data transmission apparatus 100 shown in FIG. 17, and/or the data transmission apparatus 200 shown in FIG. 18, and/or the data transmission apparatus 300 shown in FIG. 19.

An embodiment of this application further provides a computer-readable storage medium. The computer-readable storage medium stores instructions. When the instructions are run on a processor, a method procedure shown in any one of FIG. 11 to FIG. 16 is implemented.

An embodiment of this application further provides a computer program product. When the computer program product runs on a processor, a method procedure shown in any one of FIG. 11 to FIG. 16 is implemented.

In the foregoing embodiments, the description of each embodiment has respective focuses. For a part that is not described in detail in an embodiment, refer to related descriptions in other embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When functions are implemented in the form of a software functional unit and sold or used as an independent product, the functions may be stored in a computer-readable storage medium. Based on such an understanding, all or some of the technical solutions of this application may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a ROM, a RAM, a magnetic disk, or an optical disc. The foregoing descriptions are merely specific implementations of this application, but are not intended to limit the protection scope of this application. The protection scope of this application shall be subject to the protection scope of the claims.

## Claims

1. A data transmission method, wherein the method is applied to a master node, and comprises:
sending (S201), by the master node, a first synchronization moment, wherein
the first synchronization moment is used to implement synchronization between a first slave node timer and a master node timer; and
sending (S203), by the master node, a first preset instruction, wherein
the first preset instruction comprises a first instruction effective moment, the first instruction effective moment indicates a moment at which a first slave node executes the first preset instruction, the first instruction effective moment is greater than or equal to a sum of a sending moment of the first preset instruction and a maximum delay of a first link, and the first link is a link between the master node and the first slave node,
wherein the method further comprises:
sending, by the first slave node, a third synchronization moment to a second slave node, wherein
the third synchronization moment is used to implement synchronization between a second slave node timer and the first slave node timer;
sending, by the master node, a second preset instruction; and
forwarding, by the first slave node, the second preset instruction to the second slave node, wherein
the second preset instruction comprises a second instruction effective moment, the second instruction effective moment indicates a moment at which the second slave node executes the second preset instruction, the second instruction effective moment is greater than or equal to a sum of a moment at which the master node sends the second preset instruction to the first slave node, the maximum delay of the first link, and a maximum delay of a third link, the second instruction effective moment is the same as the first instruction effective moment, and the third link is a link between the first slave node and the second slave node.

2. The method according to claim 1, wherein the method further comprises:
sending, by the master node, a second synchronization moment, wherein
the second synchronization moment is used to implement synchronization between a second slave node timer and the master node timer; and
sending, by the master node, a second preset instruction, wherein
the second preset instruction comprises a second instruction effective moment, the second instruction effective moment indicates a moment at which a second slave node executes the second preset instruction, the second instruction effective moment is greater than or equal to a sum of a sending moment of the second preset instruction and a maximum delay of a second link, the second instruction effective moment is the same as the first instruction effective moment, and the second link is a link between the master node and the second slave node.

3. The method according to claim 1 or 2, wherein the first preset instruction instructs a first camera to photograph, and the second preset instruction instructs a second camera to photograph; or the first preset instruction instructs a first display device to perform display, and the second preset instruction instructs a second display device to perform display.

4. A data transmission method, wherein the method is applied to a slave node, and comprises:
receiving, by a first slave node, a first synchronization moment, wherein
the first synchronization moment is used to implement synchronization between a first slave node timer and a master node timer;
receiving, by the first slave node, a first preset instruction, wherein
the first preset instruction comprises a first instruction effective moment, the first instruction effective moment is greater than or equal to a sum of a sending moment of the first preset instruction and a maximum delay of a first link, and the first link is a link between the first slave node and a master node; and
executing, by the first slave node, the first preset instruction at the first instruction effective moment,
sending, by the first slave node, a third synchronization moment to a second slave node, wherein
the third synchronization moment is used to implement synchronization between a second slave node timer and the first slave node timer; and
sending, by the first slave node, a second preset instruction to the second slave node, wherein
the second preset instruction comprises a second instruction effective moment, the second instruction effective moment indicates a moment at which the second slave node executes the second preset instruction, the second instruction effective moment is greater than or equal to a sum of a moment at which the first slave node sends the second preset instruction to the second slave node and a maximum delay of a third link, the second instruction effective moment is the same as the first instruction effective moment, and the third link is a link between the first slave node and the second slave node.

5. The method according to claim 4, wherein the method further comprises:
receiving, by a second slave node, a second synchronization moment, wherein
the second synchronization moment is used to implement synchronization between a second slave node timer and the master node timer;
receiving, by the second slave node, a second preset instruction, wherein
the second preset instruction comprises a second instruction effective moment, the second instruction effective moment is greater than or equal to a sum of a sending moment of the second preset instruction and a maximum delay of a second link, the second instruction effective moment is the same as the first instruction effective moment, and the second link is a link between the master node and the second slave node; and
executing, by the second slave node, the second preset instruction at the second instruction effective moment.

6. The method according to claim 4, wherein the second preset instruction is generated by the master node or generated by the first slave node.

7. The method according to any one of claims 4 to 5, wherein the first preset instruction instructs a first camera to photograph, and the second preset instruction instructs a second camera to photograph; or the first preset instruction instructs a first display device to perform display, and the second preset instruction instructs a second display device to perform display.

8. A data transmission apparatus (400), wherein the apparatus (400) comprises a processor (410) and a memory (430), the memory (430) is configured to store instructions, the processor (410) is configured to execute the instructions, and when the processor (410) executes the instructions, the data transmission apparatus (400) performs the method according to any one of claims 1 to 4, or performs the method according to any one of claims 4 to 7.

## Patentansprüche

1. Datenübertragungsverfahren, wobei das Verfahren auf einen Master-Knoten angewendet wird und Folgendes umfasst:
Senden (S201) eines ersten Synchronisationszeitpunkts durch den Master-Knoten, wobei
der erste Synchronisationszeitpunkt verwendet wird, um eine Synchronisation zwischen einem ersten Zeitgeber von Slave-Knoten und einem Zeitgeber des Master-Knotens zu implementieren; und
Senden (S203) einer ersten voreingestellten Anweisung durch den Master-Knoten, wobei
die erste voreingestellte Anweisung einen ersten anweisungswirksamen Zeitpunkt umfasst, der erste anweisungswirksame Zeitpunkt einen Zeitpunkt angibt, zu welchem ein erster Slave-Knoten die erste voreingestellte Anweisung ausführt, der erste anweisungswirksame Zeitpunkt größer oder gleich einer Summe aus einem Sendezeitpunkt der ersten voreingestellten Anweisung und einer maximalen Verzögerung einer ersten Verbindung ist, und die erste Verbindung eine Verbindung zwischen dem Master-Knoten und dem ersten Slave-Knoten ist,
wobei das Verfahren ferner Folgendes umfasst:
Senden eines dritten Synchronisationszeitpunkts durch den ersten Slave-Knoten an einen zweiten Slave-Knoten, wobei
der dritte Synchronisationszeitpunkt verwendet wird, um eine Synchronisation zwischen einem zweiten Zeitgeber von Slave-Knoten und dem ersten Zeitgeber von Slave-Knoten zu implementieren;
Senden einer zweiten voreingestellten Anweisung durch den Master-Knoten; und
Weiterleiten der zweiten voreingestellten Anweisung durch den ersten Slave-Knoten an den zweiten Slave-Knoten, wobei
die zweite voreingestellte Anweisung einen zweiten anweisungswirksamen Zeitpunkt umfasst, der zweite anweisungswirksame Zeitpunkt einen Zeitpunkt angibt, zu welchem der zweite Slave-Knoten die zweite voreingestellte Anweisung ausführt, der zweite anweisungswirksame Zeitpunkt größer oder gleich einer Summe aus einem Zeitpunkt, zu welchem der Master-Knoten die zweite voreingestellte Anweisung an den ersten Slave-Knoten sendet, der maximalen Verzögerung der ersten Verbindung und einer maximalen Verzögerung einer dritten Verbindung ist, der zweite anweisungswirksame Zeitpunkt derselbe wie der erste anweisungswirksame Zeitpunkt ist und die dritte Verbindung eine Verbindung zwischen dem ersten Slave-Knoten und dem zweiten Slave-Knoten ist.

2. Verfahren nach Anspruch 1, wobei das Verfahren ferner Folgendes umfasst:
Senden eines zweiten Synchronisationszeitpunkts durch den Master-Knoten, wobei
der zweite Synchronisationszeitpunkt verwendet wird, um eine Synchronisation zwischen einem zweiten Zeitgeber von Slave-Knoten und einem Zeitgeber des Master-Knotens zu implementieren; und
Senden einer zweiten voreingestellten Anweisung durch den Master-Knoten, wobei
die zweite voreingestellte Anweisung einen zweiten anweisungswirksamen Zeitpunkt umfasst, der zweite anweisungswirksame Zeitpunkt einen Zeitpunkt angibt, zu welchem ein zweiter Slave-Knoten die zweite voreingestellte Anweisung ausführt, der zweite anweisungswirksame Zeitpunkt größer oder gleich einer Summe aus einem Sendezeitpunkt der zweiten voreingestellten Anweisung und einer maximalen Verzögerung einer zweiten Verbindung ist, der zweite anweisungswirksame Zeitpunkt derselbe wie der erste anweisungswirksame Zeitpunkt ist und die zweite Verbindung eine Verbindung zwischen dem Master-Knoten und dem zweiten Slave-Knoten ist.

3. Verfahren nach Anspruch 1 oder 2, wobei die erste voreingestellte Anweisung eine erste Kamera zum Fotografieren anweist und die zweite voreingestellte Anweisung eine zweite Kamera zum Fotografieren anweist; oder die erste voreingestellte Anweisung eine erste Anzeigevorrichtung zum Durchführen einer Anzeige anweist und die zweite voreingestellte Anweisung eine zweite Anzeigevorrichtung zum Durchführen einer Anzeige anweist.

4. Datenübertragungsverfahren, wobei das Verfahren auf einen Slave-Knoten angewendet wird und Folgendes umfasst:
Empfangen eines ersten Synchronisationszeitpunkts durch einen ersten Slave-Knoten, wobei
der erste Synchronisationszeitpunkt verwendet wird, um eine Synchronisation zwischen einem ersten Zeitgeber von Slave-Knoten und einem Zeitgeber des Master-Knotens zu implementieren;
Empfangen einer ersten voreingestellten Anweisung durch den ersten Slave-Knoten, wobei
die erste voreingestellte Anweisung einen ersten anweisungswirksamen Zeitpunkt umfasst, der erste anweisungswirksame Zeitpunkt größer oder gleich einer Summe aus einem Sendezeitpunkt der ersten voreingestellten Anweisung und einer maximalen Verzögerung einer ersten Verbindung ist, und die erste Verbindung eine Verbindung zwischen dem ersten Slave-Knoten und einem Master-Knoten ist; und
Ausführen der ersten voreingestellten Anweisung durch den ersten Slave-Knoten zu dem ersten anweisungswirksamen Zeitpunkt,
Senden eines dritten Synchronisationszeitpunkts durch den ersten Slave-Knoten an einen zweiten Slave-Knoten, wobei
der dritte Synchronisationszeitpunkt verwendet wird, um eine Synchronisation zwischen einem zweiten Zeitgeber von Slave-Knoten und dem ersten Zeitgeber von Slave-Knoten zu implementieren; und
Senden einer zweiten voreingestellten Anweisung durch den ersten Slave-Knoten an den zweiten Slave-Knoten, wobei
die zweite voreingestellte Anweisung einen zweiten anweisungswirksamen Zeitpunkt umfasst, der zweite anweisungswirksame Zeitpunkt einen Zeitpunkt angibt, zu welchem der zweite Slave-Knoten die zweite voreingestellte Anweisung ausführt, der zweite anweisungswirksame Zeitpunkt größer oder gleich einer Summe aus einem Zeitpunkt, zu welchem der erste Slave-Knoten die zweite voreingestellte Anweisung an den zweiten Slave-Knoten sendet, und einer maximalen Verzögerung der dritten Verbindung ist, der zweite anweisungswirksame Zeitpunkt derselbe wie der erste anweisungswirksame Zeitpunkt ist und die dritte Verbindung eine Verbindung zwischen dem ersten Slave-Knoten und dem zweiten Slave-Knoten ist.

5. Verfahren nach Anspruch 4, wobei das Verfahren ferner Folgendes umfasst:
Empfangen eines zweiten Synchronisationszeitpunkts durch einen zweiten Slave-Knoten, wobei
der zweite Synchronisationszeitpunkt verwendet wird, um eine Synchronisation zwischen einem zweiten Zeitgeber von Slave-Knoten und einem Zeitgeber des Master-Knotens zu implementieren;
Empfangen einer zweiten voreingestellten Anweisung durch den zweiten Slave-Knoten, wobei
die zweite voreingestellte Anweisung einen zweiten anweisungswirksamen Zeitpunkt umfasst, der zweite anweisungswirksame Zeitpunkt größer oder gleich einer Summe aus einem Sendezeitpunkt der zweiten voreingestellten Anweisung und einer maximalen Verzögerung einer zweiten Verbindung ist, der zweite anweisungswirksame Zeitpunkt derselbe wie der erste anweisungswirksame Zeitpunkt ist und die zweite Verbindung eine Verbindung zwischen dem Master-Knoten und dem zweiten Slave-Knoten ist; und
Ausführen der zweiten voreingestellten Anweisung durch den zweiten Slave-Knoten zu dem zweiten anweisungswirksamen Zeitpunkt.

6. Verfahren nach Anspruch 4, wobei die zweite voreingestellte Anweisung durch den Master-Knoten generiert wird oder durch den ersten Slave-Knoten generiert wird.

7. Verfahren nach einem der Ansprüche 4 oder 5, wobei die erste voreingestellte Anweisung eine erste Kamera zum Fotografieren anweist und die zweite voreingestellte Anweisung eine zweite Kamera zum Fotografieren anweist; oder die erste voreingestellte Anweisung eine erste Anzeigevorrichtung zum Durchführen einer Anzeige anweist und die zweite voreingestellte Anweisung eine zweite Anzeigevorrichtung zum Durchführen einer Anzeige anweist.

8. Datenübertragungseinrichtung (400), wobei die Einrichtung (400) einen Prozessor (410) und einen Speicher (430) umfasst, der Speicher (430) dazu konfiguriert ist, Anweisungen zu speichern, der Prozessor (410) dazu konfiguriert ist, die Anweisungen auszuführen, und, wenn der Prozessor (410) die Anweisungen ausführt, die Datenübertragungseinrichtung (400) das Verfahren nach einem der Ansprüche 1 bis 4 durchführt oder das Verfahren nach einem der Ansprüche 4 bis 7 durchführt.

## Revendications

1. Procédé de transmission de données, dans lequel le procédé est appliqué à un nœud maître, et comprend :
l'envoi (S201), par le nœud maître, d'un premier instant de synchronisation, dans lequel
le premier instant de synchronisation est utilisé pour mettre en œuvre la synchronisation entre un premier temporisateur de nœud esclave et un temporisateur de nœud maître ; et
l'envoi (S203), par le nœud maître, d'une première instruction prédéfinie, dans lequel
la première instruction prédéfinie comprend un premier instant d'effet d'instruction, le premier instant d'effet d'instruction indique un instant auquel un premier nœud esclave exécute la première instruction prédéfinie, le premier instant d'effet d'instruction est supérieur ou égal à une somme d'un instant d'envoi de la première instruction prédéfinie et d'un délai maximal d'une première liaison, et la première liaison est une liaison entre le nœud maître et le premier nœud esclave,
dans lequel le procédé comprend également :
l'envoi, par le premier nœud esclave, d'un troisième instant de synchronisation à un second nœud esclave, dans lequel
le troisième instant de synchronisation est utilisé pour mettre en œuvre la synchronisation entre un second temporisateur de nœud esclave et le premier temporisateur de nœud esclave ;
l'envoi, par le nœud maître, d'une seconde instruction prédéfinie ; et
la transmission, par le premier nœud esclave, de la seconde instruction prédéfinie au second nœud esclave, dans lequel
la seconde instruction prédéfinie comprend un second instant d'effet d'instruction, le second instant d'effet d'instruction indique un instant auquel le second nœud esclave exécute la seconde instruction prédéfinie, le second instant d'effet d'instruction est supérieur ou égal à une somme d'un instant auquel le nœud maître envoie la seconde instruction prédéfinie au premier nœud esclave, du délai maximal de la première liaison et d'un délai maximal d'une troisième liaison, le second instant d'effet d'instruction est identique au premier instant d'effet d'instruction, et la troisième liaison est une liaison entre le premier nœud esclave et le second nœud esclave.

2. Procédé selon la revendication 1, dans lequel le procédé comprend également :
l'envoi, par le nœud maître, d'un deuxième instant de synchronisation, dans lequel
le deuxième instant de synchronisation est utilisé pour mettre en œuvre la synchronisation entre un second temporisateur de nœud esclave et le temporisateur de nœud maître ; et
l'envoi, par le nœud maître, d'une seconde instruction prédéfinie, dans lequel
la seconde instruction prédéfinie comprend un second instant d'effet d'instruction, le second instant d'effet d'instruction indique un instant auquel un second nœud esclave exécute la seconde instruction prédéfinie, le second instant d'effet d'instruction est supérieur ou égal à une somme d'un instant d'envoi de la seconde instruction prédéfinie et d'un délai maximal d'une deuxième liaison, le second instant d'effet d'instruction est identique au premier instant d'effet d'instruction, et la deuxième liaison est une liaison entre le nœud maître et le second nœud esclave.

3. Procédé selon la revendication 1 ou 2, dans lequel la première instruction prédéfinie demande à une première caméra de photographier, et la seconde instruction prédéfinie demande à une seconde caméra de photographier ; ou la première instruction prédéfinie demande à un premier dispositif d'affichage de réaliser un affichage, et la seconde instruction prédéfinie demande à un second dispositif d'affichage de réaliser un affichage.

4. Procédé de transmission de données, dans lequel le procédé est appliqué à un nœud esclave, et comprend :
la réception, par un premier nœud esclave, d'un premier instant de synchronisation, dans lequel
le premier instant de synchronisation est utilisé pour mettre en œuvre la synchronisation entre un premier temporisateur de nœud esclave et un temporisateur de nœud maître ;
la réception, par le premier nœud esclave, d'une première instruction prédéfinie, dans lequel
la première instruction prédéfinie comprend un premier instant d'effet d'instruction, le premier instant d'effet d'instruction est supérieur ou égal à une somme d'un instant d'envoi de la première instruction prédéfinie et d'un délai maximal d'une première liaison, et la première liaison est une liaison entre le nœud premier nœud esclave et un nœud maître ; et
l'exécution, par le premier nœud esclave, de la première instruction prédéfinie au premier instant d'effet d'instruction,
l'envoi, par le premier nœud esclave, d'un troisième instant de synchronisation à un second nœud esclave, dans lequel
le troisième instant de synchronisation est utilisé pour mettre en œuvre la synchronisation entre un second temporisateur de nœud esclave et le premier temporisateur de nœud esclave ; et
l'envoi, par le premier nœud esclave, d'une seconde instruction prédéfinie au second nœud esclave, dans lequel
la seconde instruction prédéfinie comprend un second instant d'effet d'instruction, le second instant d'effet d'instruction indique un instant auquel le second nœud esclave exécute la seconde instruction prédéfinie, le second instant d'effet d'instruction est supérieur ou égal à une somme d'un instant auquel le premier nœud esclave envoie la seconde instruction prédéfinie au second nœud esclave et d'un délai maximal d'une troisième liaison, le second instant d'effet d'instruction est identique au premier instant d'effet d'instruction, et la troisième liaison est une liaison entre le premier nœud esclave et le second nœud esclave.

5. Procédé selon la revendication 4, dans lequel le procédé comprend également :
la réception, par un second nœud esclave, d'un deuxième instant de synchronisation, dans lequel
le deuxième instant de synchronisation est utilisé pour mettre en œuvre la synchronisation entre un second temporisateur de nœud esclave et le temporisateur de nœud maître ;
la réception, par le second nœud esclave, d'une seconde instruction prédéfinie, dans lequel
la seconde instruction prédéfinie comprend un second instant d'effet d'instruction, le second instant d'effet d'instruction est supérieur ou égal à une somme d'un instant d'envoi de la seconde instruction prédéfinie et d'un délai maximal d'une deuxième liaison, le second instant d'effet d'instruction est identique au premier instant d'effet d'instruction, et la deuxième liaison est une liaison entre le nœud maître et le second nœud esclave ; et
l'exécution, par le second nœud esclave, de la seconde instruction prédéfinie au second instant d'effet d'instruction.

6. Procédé selon la revendication 4, dans lequel la seconde instruction prédéfinie est générée par le nœud maître ou générée par le premier nœud esclave.

7. Procédé selon l'une quelconque des revendications 4 à 5, dans lequel la première instruction prédéfinie demande à une première caméra de photographier, et la seconde instruction prédéfinie demande à une seconde caméra de photographier ; ou la première instruction prédéfinie demande à un premier dispositif d'affichage de réaliser un affichage, et la seconde instruction prédéfinie demande à un second dispositif d'affichage de réaliser un affichage.

8. Appareil de transmission de données (400), dans lequel l'appareil (400) comprend un processeur (410) et une mémoire (430), la mémoire (430) est configurée pour stocker des instructions, le processeur (410) est configuré pour exécuter les instructions, et lorsque le processeur (410) exécute les instructions, l'appareil de transmission de données (400) réalise le procédé selon l'une quelconque des revendications 1 à 4, ou réalise le procédé selon l'une quelconque des revendications 4 à 7.
